(19) Europäisches Patentamt
European Patent Office
Office européen des brevets

(11) EP 2 276 824 B1

(12) **EUROPÄISCHE PATENTSCHRIFT**

(45) Veröffentlichungstag und Bekanntmachung des Hinweises auf die Patenterteilung:
**22.01.2014 Patentblatt 2014/04**

(21) Anmeldenummer: **09745511.7**

(22) Anmeldetag: **02.05.2009**

(51) Int Cl.:
***C11D 3/37*** (2006.01) ***C08G 63/66*** (2006.01)
***C08G 63/672*** (2006.01)

(86) Internationale Anmeldenummer:
**PCT/EP2009/003169**

(87) Internationale Veröffentlichungsnummer:
**WO 2009/138177 (19.11.2009 Gazette 2009/47)**

(54) **ADDITIVE FÜR WASCH- UND REINIGUNGSMITTEL**
ADDITIVES FOR DETERGENT COMPOSITIONS
ADDITIFS POUR COMPOSITIONS DÉTERGENTES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **15.05.2008 DE 102008023803**

(43) Veröffentlichungstag der Anmeldung:
**26.01.2011 Patentblatt 2011/04**

(73) Patentinhaber: **Clariant Finance (BVI) Limited**
**Road Town, Tortola (VG)**

(72) Erfinder:
- **MORSCHHÄUSER, Roman**
  **55122 Mainz (DE)**
- **LANG, Frank-Peter**
  **65795 Hattersheim (DE)**
- **LABORDA, Steve**
  **65719 Hofheim (DE)**
- **BORCHERS, Georg**
  **61231 Bad Nauheim (DE)**
- **SEEBACH, Michael**
  **65719 Hofheim (DE)**
- **GEBHARD, Sven**
  **65823 Liederbach (DE)**

(74) Vertreter: **Paczkowski, Marcus**
**Clariant Produkte (Deutschland) GmbH**
**Patent Management**
**Industriepark Höchst, G 860**
**65926 Frankfurt am Main (DE)**

(56) Entgegenhaltungen:
**EP-A- 0 964 015**
**WO-A-92/17523**
**WO-A-2005/056742**
**WO-A-2006/133868**
**DE-A- 19 522 431**
**US-A- 3 893 929**

EP 2 276 824 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft Additive für Wasch- und Reinigungsmittel in Form von Polyestern in fester, rieselfähiger Form, enthaltend Struktureinheiten aus Terephthalsäure(dimethylester), Ethylenglykol, Polyethylenglykolen und optional Polyalkylenglykolmonoalkylethern, Propylenglykol, sowie vernetzend wirkenden polyfunktionellen Monomeren. Diese Polyester haben vorzugsweise eine Schmelztemperatur oberhalb 40 °C, einem Fließfaktor $ff_c$ von >8 und ein Molekulargewicht $M_p$ im Bereich von 4.000 bis 16.000.

Polyester, hergestellt aus aromatischen Dicarbonsäuren wie Terephthalsäure oder Isophthalsäure, und Monomeren aus der Gruppe der Diole, wie Ethylenglykol, Propylenglykol, Polyalkylenglykol und deren Verwendung als "Soil Release Polymer (SRP)" sind lange bekannt und in zahlreichen Patentschriften beschrieben.

In US 3,893,929 werden Mittel in Form eines sauren, wässrigen Bades zur Ausrüstung von Polyestergewebe mit SRP bei der Textilherstellung beschrieben, wobei die eingesetzten SRPs aus einer Dicarbonsäure und einem oder mehreren Polyglycolen, bevorzugt PEG mit Molekulargewichten im Bereich von 1.500 bis 2.000 hergestellt wurden.

In DE 3324258 werden Polymere aus Polyethylenterephthalat- und Polyoxyethylenterephthalat-Einheiten mit einem Molekulargewicht von 15.000 bis 50.000 beschrieben, wobei das Molekulargewicht der Polyethylenglykoleinheit (PEG) im Bereich von 2.500 bis 5.000 liegt, und es wird dort deren Soil Release Effekt ausgelobt. Der Nachteil dieser Soil Release Polymere (SRPs) liegt darin, dass diese nicht nur auf der Textiloberfläche adsorbieren, sondern auch auf Farb- und Schmutzpartikel, die wiederum auf der Textilie haften bleiben.

In US 3,962,152 werden Waschmittel offenbart, die SRPs mit Molekulargewichten von 40.000 bis 50.000 aus Ethylenterephthalat und Polyethylenglykol enthalten. Diese hochmolekularen SRP's sind wenig wasserlöslich, so dass der Soil-Release Effekt auf der Textilie unbefriedigend ist.

US 4,702,857 beansprucht Polyester aus Ethylenglykol, 1,2-Propylenglykol oder Mischungen daraus, Polyethylenglykol mit mindestens 10 Glykoleinheiten, das an einem Ende mit einer kurzkettigen Alkylgruppe, insbesondere mit einer Methylgruppe verschlossen ist, einer Dicarbonsäure bzw. einem Dicarbonsäureester und optional Alkalisalzen von sulfonierten aromatischen Dicarbonsäuren.

In WO 02/18474 werden bei Raumtemperatur flüssige, fließfähige nichtionische Oligoester aus den Monomereinheiten Dicarbonsäure, Diol und Alkylenoxid und deren Verwendung zum Reinigen harter Oberflächen beschrieben. Für feste Formulierungen sind diese Oligoester aufgrund ihrer Klebrigkeit ungeeignet.

In EP 253 567 werden SRPs aus Terephthalsäure und Polyethylenglykolen offenbart, deren Molekulargewichte im Bereich von 900 bis 9.000 liegen, wobei die Molekulargewichte der eingesetzten Polyethylenglykoleinheiten im Bereich von 300 bis 3.000 liegen.

Diese Polyestertypen sind flüssig bis wachsartig fest, jedoch klebrig oder sie neigen beim Lagern zur Klebrigkeit und sind für feste, riesetfähige Zubereitungen schwer zu handhaben.

Aufgabe war es daher, Polyester mit sehr guten Soil Release Effekten bereitzustellen, die gleichzeitig fest, hydrolysestabil und nicht klebrig sind. Diese sollen kompatibel mit in Wasch- und Reinigungsmitteln gängigen Zusatz- und Hilfsstoffen sein und leicht in feste Formulierungen eingearbeitet werden können. Sie sollen bei Temperaturen unterhalb von 60 °C gut in Wasser dispergierbar sein und ihre Wirkung in Wasch- und Reinigungsmitteln voll entfalten. Zudem sollen sie ohne hohen Energieaufwand in Form von lagerstabilen Granulaten konfektionierbar sein.

Es wurde überraschend gefunden, dass diese Aufgabe gelöst wird durch die im Folgenden beschriebenen Additive in Form von Polyestern.

Gegenstand der Erfindung sind Additive für Wasch- und Reinigungsmittel erhalten durch Polykondensation einer

a) aromatischen Dicarbonsäure und/oder deren $C_1$-$C_4$-Alkylestern,
b) Ethylenglykol,
c) 1,2-Propylenglykol,
d) Polyethylenglykol mit einer mittleren Molmasse [$M_n$] von 5000 bis 8.000 g/mol,
e) $C_1$-$C_4$-Alkylpolyalkylenglykolether mit einer mittleren Molmasse des Polyalkylenglykolethers von 200 bis 5.000 und
f) einer polyfunktionellen Verbindung, wobei die Molverhältnisse der Komponenten b), c), d), e) und f), jeweils bezogen auf 1 Mol der Komponente a); 0,1 bis 4 Mol für die Komponente b); 0 bis 4 Mol für die Komponente c); 0,1 bis 0,5 Mol für die Komponente d); 0 bis 0,5 Mol für die Komponente e) und 0 bis 0,25 Mol für die Komponente f) betragen und gekennzeichnet durch ein Molekulargewicht mit Peakmaximum $M_p$ von 6000 bis 14000 g/mol.

Diese Additive stellen Poly- oder Oligoester dar. Sie sind bei Temperaturen oberhalb von 40 °C fest, bei der Lagerung über mehrere Wochen tritt keine Klebrigkeit auf und sie zeigen eine ausgezeichnete Soil Release Wirkung. Diese nichtionischen Polyester können in Granulate mit gewünschter Korngrößenverteilung überführt werden.

Bevorzugt sind solche Additive wie oben definiert, bei denen die Molverhältnisse der Komponenten b), c), d), e) und f), jeweils bezogen auf 1 Mol der Komponente a); 1,0 bis 2,5 Mol für die Komponente b); 0 Mol für die Komponente

c); 0,1 bis 0,4 Mol für die Komponente d); 0 bis 0,25 Mol für die Komponente e) und 0 bis 0,2 Mol für die Komponente f) betragen.

Besonders bevorzugt sind Additive, bei denen die Molverhältnisse der Komponenten b), c), d), e) und f) jeweils bezogen auf 1 Mol der Komponente a); 1,0 bis 2,5 Mol für die Komponente b); 0 Mol für die Komponente c); 0,1 bis 0,3 Mol für die Komponente d); 0 bis 0,2 Mol für die Komponente e) und 0 bis 0,1 Mol für die Komponente f) betragen.

Weiter besonders bevorzugt sind Additive, die dadurch gekennzeichnet sind, dass die Komponente a) Terephthalsäure und/oder Terephthalsäure-dimethylester ist. Ebenso besonders bevorzugt sind Additive, dadurch gekennzeichnet, dass das Polyethylenglykol d) eine mittlere Molmasse [Mn] von 5.000 bis 7.000, insbesondere von 5.000 bis 6.000, außerordentlich bevorzugt 6.000 aufweist.

Bevorzugt sind solche Additive wie oben definiert, die einen Fließfaktor ffc von mehr als 8, insbesondere von 10 bis 30 aufweisen.

Bevorzugt haben diese Additive zusätzlich einen Schmelzpunkt (definiert als das Peakmaximum aus Differential Scanning Calorimetry) von über 50 °C, insbesondere über 55 °C.

Solche Additive wie oben definiert haben zusätzlich zu dem Fließfaktor und dem Schmelzpunkt wie zuvor definiert ein Molekulargewicht mit dem Peakmaximum $M_p$ (aus Gelpermeationschromatography GPC) von 6.000 bis 14.000 g/mol, gemessen gegen eng verteilte Polyethylenglykol-Standards, aufweisen.

Ebenfalls bevorzugt sind Additive, wie oben definiert, dadurch gekennzeichnet, dass die Molekulargewichte Mp im Bereich von 6.500 bis 13.000 g/mol, bevorzugt 7.000 bis 12.000 g/mol liegen.

Als Komponente e) sind bevorzugt Poly[ethlyenglykol-propylenglykol]-monomethylether mit mittleren Molmassen [Mn] von 100 bis 2.000 g/mol und Polyethylenglykolmonomethylether der allgemeinen Form: $CH_3$-O-$(C_2H_4O)_n$-H mit n $\geq$ 1 bis 99, bevorzugt n = 1 bis 20.

Ganz besonders bevorzugt als Komponente e) sind

Polyalkylenglykolmonoalkylether der allgemeinen Form: $CH_3$-O-$(C_2H_4O)_n$-H mit n=2bis10.

Neben linearen Polyestern, die aus den Struktureinheiten a), b), c), d) und e) resultieren, sind auch vernetzte oder verzweigte Polyesterstrukturen im Sinne der Erfindung möglich. Ausgedrückt wird dies durch die Anwesenheit einer vernetzend wirkenden polyfunktionellen Verbindung f).

Bevorzugte Beispiele sind hierfür Zitronensäure, Äpfelsäure, Weinsäure und Gallussäure, besonders bevorzugt 2,2-Dihydroxymethylpropionsäure.

Weiterhin bevorzugt werden mehrwertige Alkohole wie Pentaerythrol, Glycerin, Sorbitol und Trimethylolpropan eingesetzt oder mehrwertige aliphatische und aromatische Carbonsäuren, wie Benzol-1,2,3-tricarbonsäure (Hemimellithsäure), Benzol-1,2,4-tricarbonsäure (Trimellithsäure), besonders bevorzugt Benzol-1,3,5-tricarbonsäure (Trimesithsäure).

Der Vorteil dieser Polyester liegt darin, dass sie bei der Lagerung bei 0 °C bis 40 °C über mehrere Monate hinweg rieselfähig bleiben und keinerlei Klebrigkeit zeigen. Außerdem sind sie gut in Wasser dispergierbar.

Die Synthese der erfindungsgemäßen Polyester erfolgt nach an sich bekannten Verfahren, indem die oben genannten Komponenten unter Zusatz eines Katalysators zunächst bei Normaldruck auf Temperaturen von 160 bis ca. 220 °C unter Verwendung einer Inert-Atmosphäre erhitzt werden. Dann werden die erforderlichen Molekulargewichte im Vakuum bei Temperaturen von 160 bis ca. 240 °C durch Abdestillieren überstöchiometrischer Mengen der eingesetzten Glykole aufgebaut. Für die Reaktion eignen sich die bekannten Umesterungs- und Kondensationskatalysatoren des Standes der Technik, wie beispielsweise Titantetraisopropylat, Dibutylzinnoxid, Alkali- oder Erdalkalimetallalkoholate oder Antimontrioxid/Calciumacetat. Bezüglich weiterer Einzelheiten zur Durchführung des Verfahrens wird auf EP 442 101 verwiesen.

Ein bevorzugtes Verfahren zur Herstellung der erfindungsgemäßen Polyester ist dadurch gekennzeichnet, dass die Kondensation der Komponenten im Eintopfverfahren durchgeführt wird, wobei der Umesterungs- und Kondensationskatalysator vor dem Aufheizen zugegeben wird.

Die erfindungsgemäßen Polyester sind von fester Konsistenz und können in einfacher Weise zu Granulaten definierter Partikelgrößen verarbeitet werden.

Die Granulierung der erfindungsgemäßen Polyester kann in der Weise erfolgen, dass die bei der Synthese als Schmelze gebildeten Polyester durch Abkühlen verfestigt werden. Prinzipiell ist die Abkühlung in einem Gasstroms denkbar, wie z. B. in Sprühkühltürmen, Prilltürmen oder Luftkühlstrecken in einer Stranggranulierung. Vorzugsweise erfolgt die Abkühlung auf gekühlten Flächen, wie z. B. auf einer Schuppenwalze oder einem Kühlband. Hierbei wird die Schmelze bei Kühlflächentemperaturen von 0 - 40 °C, bevorzugt 10 - 30 °C aufgetragen und verfestigt.

Die so erhaltenen Schuppen, Plattenbruchstücke oder Formkörper können anschließend durch Mahlung und Siebung auf die gewünschte Korngröße gebracht werden. Für die Zerkleinerung eignen sich eine Reihe von Mahlaggregaten, wie z. B. Scheidmühlen oder Siebmühlen.

Die Korngröße des auf diese Weise hergestellten Granulats liegt im Allgemeinen im Bereich von 100 $\mu$m - 2.000 $\mu$m, vorzugsweise 200 $\mu$m - 1.800 $\mu$m, besonders bevorzugt 300 $\mu$m - 1.200 $\mu$m. Das Schüttgewicht liegt im Bereich von 400 bis 700 kg/$m^3$. Die Riesel- und Fließfähigkeit der Polyestergranulate kann durch den so genannten Fließfaktor ffc und der Einteilung nach Jenike beschrieben werden. Typischerweise zeigen die Granulate eine sehr gute Rieselfähigkeit,

auch nach Lagerung, und es werden Fließfaktoren > 8 erhalten.

Gegenstand der Erfindung ist außerdem die Verwendung der erfindungsgemäßen Polyester in Wasch- und Reinigungsmitteln, Textilpflegemitteln und Mitteln zur Ausrüstung von Textilien. Die erfindungsgemäßen Polyester verleihen den Textilfasern signifikant verbesserte schmutzabweisende Eigenschaften und unterstützen das Schmutzablösevermögen der übrigen Waschmittelbestandteile gegenüber öligen, fettigen Verschmutzungen oder Pigmentanschmutzungen wesentlich.

Weiter von Vorteil kann die Verwendung der erfindungsgemäßen Polyester in Nachbehandlungsmitteln für die Wäsche, beispielsweise in einem Weichspülmittel sein.

Die Wasch- und Reinigungsmittelformulierungen, in denen die erfindungsgemäßen Polyester eingesetzt werden können, sind pulver-, granulat-, pasten-, gelförmig oder flüssig.

Beispiele hierfür sind Vollwaschmittel, Feinwaschmittel, Colorwaschmittel, Wollwaschmittel, Gardinenwaschmittel, Baukastenwaschmittel, Waschtabletten, Fleckensalze, Wäschestärken und -steifen sowie Bügelhilfen.
Die erfindungsgemäßen Polyester können auch in Haushaltsreinigungsmittel, beispielsweise Allzweckreiniger, Geschirrspülmittel, Reinigungs- und Pflegemittel für Böden und andere harte Oberfläche, z. B. aus Kunststoff, Keramik, Glas eingearbeitet werden.

Beispiele für technische Reinigungsmittel sind Kunststoffreinigungs- und Pflegemittel, etwa für Gehäuse und Autoarmaturen, sowie Reinigungs- und Pflegemittel für lackierte Oberflächen wie etwa Autokarosserien.

Die erfindungsgemäßen Wasch-, Pflege- und Reinigungsmittelformulierungen enthalten mindestens 0,1 Gew.-%, bevorzugt zwischen 0,1 und 10 Gew.-% und besonders bevorzugt 0,2 bis 3 % Gew.-% der erfindungsgemäßen Polyester, bezogen auf die fertigen Mittel.

Die Formulierungen sind je nach ihrer vorgesehenen Anwendung in ihrer Zusammensetzung der Art der zu behandelnden oder zu waschenden Textilien anzupassen.

Die erfindungsgemäßen Wasch- und Reinigungsmittel können gängige Inhaltsstoffe, wie Tenside, Emulgatoren, Gerüststoffe, Bleichkatalysatoren und -Aktivatoren, Sequestriermittel, Vergrauungsinhibitoren, Farbübertragungsinhibitoren, Farbfixiermittel, Enzyme, optische Aufheller sowie weich machende Komponente enthalten. Außerdem können Formulierungen oder Teile der Formulierung im Sinne der Erfindung durch Farbstoffe und/oder Duftstoffe gezielt eingefärbt und/oder parfümiert werden.

Die Gesamtkonzentration von Tensiden in der fertigen Wasch- und Reinigungsmittelformulierung kann von 1 bis 99 % und bevorzugt von 5 bis 80 % (alles Gew.-%) betragen. Die verwendeten Tenside können anionisch, nichtionisch, amphoter und kationisch sein. Es können auch Mischungen der genannten Tenside verwendet werden. Bevorzugte Wasch- und Reinigungsmittelformulierungen enthalten anionische und/oder nichtionische Tenside und deren Mischungen mit weiteren Tensiden.

Als anionische Tenside kommen Sulfate, Sulfonate, Carboxylate, Phosphate und Mischungen daraus in Betracht. Geeignete Kationen sind hierbei Alkalimetalle, wie z. B. Natrium oder Kalium oder Erdalkalimetalle, wie z. B. Calcium oder Magnesium sowie Ammonium, substituierte Ammoniumverbindungen, einschließlich Mono-, Di- oder Triethanolammoniumkationen, und Mischungen daraus. Folgende Typen von anionischen Tensiden sind von besonderem Interesse:

Alkylestersulfonate, Alkylsulfate, Alkylethersulfate, Alkylbenzolsulfonate, Alkansulfonate und Seifen, wie im Folgenden beschrieben.

Alkylestersulfonate sind unter anderem lineare Ester von $C_8$-$C_{20}$-Carboxylsäuren (d. h. Fettsäuren), welche mittels gasförmigem $SO_3$ sulfoniert werden, wie in "The Journal of the American Oil Chemists Society" 52 (1975), pp. 323-329 beschrieben wird. Geeignete Ausgangsmaterialien sind natürliche Fette wie z. B. Talg, Kokosöl und Palmöl, können aber auch synthetischer Natur sein. Bevorzugte Alkylestersulfonate, speziell für Waschmittelanwendungen, sind Verbindungen der Formel

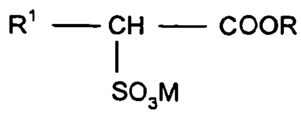

worin $R^1$ einen $C_8$-$C_{20}$-Kohlenwasserstoffrest, bevorzugt Alkyl, und R einen $C_1$-$C_6$ Kohlenwasserstoffrest, bevorzugt Alkyl, darstellt. M steht für ein Kation, das ein wasserlösliches Salz mit dem Alkylestersulfonat bildet. Geeignete Kationen sind Natrium, Kalium, Lithium oder Ammoniumkationen, wie Monoethanolamin, Diethanolamin und Triethanolamin. Bevorzugt bedeuten $R^1$ $C_{10}$-$C_{16}$-Alkyl und R Methyl, Ethyl oder Isopropyl. Besonders bevorzugt sind Methylestersulfonate, in denen $R^1$ $C_{10}$-$C_{16}$-Alkyl bedeutet.

Alkylsulfate sind hier wasserlösliche Salze oder Säuren der Formel $ROSO_3M$, worin R ein $C_{10}$-$C_{24}$-Kohlenwasserstoffrest, bevorzugt ein Alkyl- oder Hydroxyalkylrest mit$C_{10}$-$C_{20}$-Alkylkomponente, besonders bevorzugt ein $C_{12}$-$C_{18}$ Alkyl- oder Hydroxyalkylrest ist. M ist Wasserstoff oder ein Kation, z. B. ein Alkalimetallkation (z. B. Natrium, Kalium, Lithium) oder Ammonium oder substituiertes Ammonium, z. B. Methyl-, Dimethyl- und Trimethylammoniumkationen und quaternäre Ammoniumkationen, wie Tetramethylammonium- und Dimethylpiperidiniumkationen und quartäre Ammoniumkationen, abgeleitet von Alkylaminen wie Ethylamin, Diethylamin, Triethylamin und Mischungen davon. Alkylketten mit $C_{12}$-$C_{16}$ sind für niedrige Waschtemperaturen (z. B. unter ca. 50 °C) und Alkylketten mit $C_{16}$-$C_{18}$ für höhere Waschtemperaturen (z. B. oberhalb ca. 50 °C) bevorzugt.

Alkylethersulfate sind wasserlösliche Salze oder Säuren der Formel $RO(A)_m SO_3M$, worin R einen unsubstituierten $C_{10}$-$C_{24}$-Alkyl- oder Hydroxyalkylrest, bevorzugt einen $C_{12}$-$C_{20}$-Alkyl- oder Hydroxyalkylrest, besonders bevorzugt $C_{12}$-$C_{18}$-Alkyl- oder Hydroxyalkylrest darstellt. A ist eine Ethoxy- oder Propoxyeinheit, m ist eine Zahl größer als 0, vorzugsweise zwischen ca. 0,5 und ca. 6, besonders bevorzugt zwischen ca. 0,5 und ca. 3 und M ist ein Wasserstoffatom oder ein Kation wie z. B. Natrium, Kalium, Lithium, Calcium, Magnesium, Ammonium oder ein substituiertes Ammoniumkation. Spezifische Beispiele von substituierten Ammoniumkationen sind Methyl-, Dimethyl-, Trimethylammonium- und quarternäre Ammoniumkationen wie Tetramethylammonium und Dimethylpiperidiniumkationen sowie solche, die von Alkylaminen, wie Ethylamin, Diethylamin, Triethylamin oder Mischungen davon abgeleitet sind. Als Beispiele seien $C_{12}$- bis $C_{18}$-Fettalkoholethersulfate genannt wobei der Gehalt an EO 1, 2, 2.5, 3 oder 4 mol pro mol des Fettalkoholethersulfats beträgt, und in denen M Natrium oder Kalium ist.

In sekundären Alkansulfonaten kann die Alkylgruppe entweder gesättigt oder ungesättigt, verzweigt oder linear und gegebenenfalls mit einer Hydroxylgruppe substituiert sein. Die Sulfogruppe kann an einer beliebigen Position der C-Kette sein, wobei die primären Methylgruppen am Kettenanfang und Kettenende keine Sulfonatgruppen besitzen. Die bevorzugten sekundären Alkansulfonate enthalten lineare Alkylketten mit ca. 9 bis 25 Kohlenstoffatomen, bevorzugt ca. 10 bis ca. 20 Kohlenstoffatome und besonders bevorzugt ca. 13 bis 17 Kohlenstoffatome. Das Kation ist beispielsweise Natrium, Kalium, Ammonium, Mono-, Di- oder Triethanolammonium, Calcium oder Magnesium, und Mischungen davon. Natrium als Kation ist bevorzugt.

Neben sekundären Alkansulfonaten können auch primäre Alkansulfonate in den erfindungsgemäßen Wasch- und Reinigungsmitteln eingesetzt werden.
Die bevorzugten Alkylketten und Kationen entsprechen denen der sekundären Alkansulfonaten.

Die Herstellung von primärer Alkansulfonsäure, aus der die als Tensid wirksamen entsprechenden Sulfonate erhalten werden, ist z. B. in EP 854 136-A1 beschrieben.

Weitere geeignete anionische Tenside sind Alkenyl- oder Alkylbenzolsulfonate. Die Alkenyl- oder Alkylgruppe kann verzweigt oder linear und gegebenenfalls mit einer Hydroxylgruppe substituiert sein. Die bevorzugten Alkylbenzolsulfonate enthalten lineare Alkylketten mit ca. 9 bis 25 Kohlenstoffatomen, bevorzugt von ca. 10 bis ca. 13 Kohlenstoffatome, das Kation ist Natrium, Kalium, Ammonium, Mono-, Di- oder Triethanolammonium, Calcium oder Magnesium und Mischungen davon. Für milde Tensidsysteme ist Magnesium als Kation bevorzugt, für Standardwaschanwendungen dagegen Natrium. Gleiches gilt für Alkenylbenzolsulfonate.

Der Begriff anionische Tenside schließt auch Olefinsulfonate mit ein, die durch Sulfonierung von $C_{12}$-$C_{24}$-, vorzugsweise $C_{14}$-$C_{16}$-$\alpha$-Olefinen mit Schwefeltrioxid und anschließende Neutralisation erhalten werden. Bedingt durch das Herstellverfahren, können diese Olefinsulfonate kleinere Mengen an Hydroxyalkansulfonaten und Alkandisulfonaten enthalten. Spezielle Mischungen von $\alpha$-Olefinsulfonaten sind in US-3,332,880 beschrieben.

Weitere bevorzugte anionische Tenside sind Carboxylate, z. B. Fettsäureseifen und vergleichbare Tenside. Die Seifen können gesättigt oder ungesättigt sein und können verschiedene Substituenten, wie Hydroxylgruppen oder $\alpha$-Sulfonatgruppen enthalten. Bevorzugt sind lineare gesättigte oder ungesättigte Kohlenwasserstoffreste als hydrophober Anteil mit ca. 6 bis ca. 30, bevorzugt ca. 10 bis ca. 18 Kohlenstoffatomen.

Als anionische Tenside kommen weiterhin Salze von Acylaminocarbonsäuren in Frage, die durch Umsetzung von Fettsäurechloriden mit Natriumsarkosinat im alkalischen Medium entstehenden Acylsarcosinate; Fettsäure-Eiweiß-Kondensationsprodukte, die durch Umsetzung von Fettsäurechloriden mit Oligopeptiden erhalten werden; Salze von Alkylsulfamidocarbonsäuren; Salze von Alkyl- und Alkylarylethercarbonsäuren; $C_8$-$C_{24}$-Olefinsulfonate, sulfonierte Polycarboxylsäuren, hergestellt durch Sulfonierung der Pyrolyseprodukte von Erdalkalimetallcitraten, wie z. B. beschrieben in GB-1,082,179; Alkylglycerinsulfate, Oleylglycerinsulfate, Alkylphenolethersulfate, primäre Paraffinsulfonate, Alkylphosphate, Alkyletherphosphate, Isethionate, wie Acylisethionate, N-Acyltauride, Alkylsuccinate, Sulfosuccinate, Monoester der Sulfosuccinate (besonders gesättigte und ungesättigte $C_{12}$-$C_{18}$-Monoester) und Diester der Sulfosuccinate (besonders gesättigte und ungesättigte $C_{12}$-$C_{18}$-Diester), Acylsarcosinate, Sulfate von Alkylpolysacchariden wie Sulfate von Alkylpolyglycosiden, verzweigte primäre Alkylsulfate und Alkylpolyethoxycarboxylate wie die der Formel RO $(CH_2CH_2)_kCH_2COO^-M^+$, worin R $C_8$ bis $C_{22}$-Alkyl, k eine Zahl von 0 bis 10 und M ein Kation ist, Harzsäuren oder hydrierte Harzsäuren, wie Rosin oder hydriertes Rosin oder Tallölharze und Tallölharzsäuren.

Als nicht-ionische Tenside kommen beispielsweise folgende Verbindungen in Frage:

Polyethylen-, Polypropylen- und Polybutylenoxidkondensate von Alkylphenolen.

Diese Verbindungen umfassen die Kondensationsprodukte von Alkylphenolen mit einer $C_6$- bis $C_{20}$-Alkylgruppe, die entweder linear oder verzweigt sein kann, mit Alkenoxiden. Bevorzugt sind Verbindungen mit ca. 5 bis 25 mol Alkenoxid pro mol Alkylphenol. Kommerziell erhältliche Tenside diesen Typs sind z. B. Igepal® CO-630, Triton® X-45, X-114, X-100 und X102, und die Arkopal®-N-Marken der Clariant Produkte (Deutschland) GmbH. Diese Tenside werden als Alkylphenolalkoxilate, z. B. Alkylphenolethoxilate, bezeichnet.

Kondensationsprodukte von aliphatischen Alkoholen mit ca. 1 bis ca. 25 mol Ethylenoxid.
Die Alkylkette der aliphatischen Alkohole kann linear oder verzweigt, primär oder sekundär sein, und enthält im Allgemeinen ca. 8 bis ca. 22 Kohlenstoffatome. Besonders bevorzugt sind die Kondensationsprodukte von $C_{10}$- bis $C_{20}$-Alkoholen mit ca. 2 bis ca. 18 mol Ethylenoxid pro mol Alkohol. Die Alkylkette kann gesättigt oder auch ungesättigt sein. Die Alkoholethoxilate können eine enge ("Narrow Range Ethoxilates") oder eine breite Homologenverteilung des Ethylenoxides ("Broad Range Ethoxilates") aufweisen. Beispiele von kommerziell erhältlichen nichtionischen Tensiden dieses Types sind Tergitol® 15-S-9 (Kondensationsprodukt eines linearen sekundären $C_{11}$-$C_{15}$-Alkohols mit 9 mol Ethylenoxid), Tergitol® 24-L-NMW (Kondensationsprodukt eines linearen primären $C_{12}$-$C_{14}$-Alkohols mit 6 mol Ethylenoxid bei enger Molgewichtsverteilung). Ebenfalls unter diese Produktklasse fallen die Genapol®-Marken der Clariant Produkte (Deutschland) GmbH.

Kondensationsprodukte von Ethylenoxid mit einer hydrophoben Basis, gebildet durch Kondensation von Propylenoxid mit Propylenglykol.

Der hydrophobe Teil dieser Verbindungen weist bevorzugt ein Molekulargewicht zwischen ca. 1.500 und ca. 1.800 auf. Die Anlagerung von Ethylenoxid an diesen hydrophoben Teil führt zu einer Verbesserung der Wasserlöslichkeit. Das Produkt ist flüssig bis zu einem Polyoxyethylengehalt von ca. 50 % des Gesamtgewichtes des Kondensationsproduktes, was einer Kondensation mit bis zu ca. 40 mol Ethylenoxid entspricht. Kommerziell erhältliche Beispiele dieser Produktklasse sind die Pluronic®-Marken der BASF und die Genapol® PF-Marken der Clariant Produkte (Deutschland) GmbH.

Kondensationsprodukte von Ethylenoxid mit einem Reaktionsprodukt von Propylenoxid und Ethylendiamin.

Die hydrophobe Einheit dieser Verbindungen besteht aus dem Reaktionsprodukt von Ethylendiamin mit überschüssigem Propylenoxid und weist im Allgemeinen ein Molekulargewicht von ca. 2.500 bis 3.000 auf. An diese hydrophobe Einheit wird Ethylenoxid bis zu einem Gehalt von ca. 40 bis ca. 80 Gew.-% Polyoxyethylen und einem Molekulargewicht von ca. 5.000 bis 11.000 addiert. Kommerziell erhältliche Beispiele dieser Verbindungsklasse sind die Tetronic®-Marken der BASF und die Genapol® PN-Marken der Clariant Produkte (Deutschland) GmbH.

Semipolare nichtionische Tenside

Diese Kategorie von nichtionischen Verbindungen umfasst wasserlösliche Aminoxide, wasserlösliche Phosphinoxide und wasserlösliche Sulfoxide, jeweils mit einem Alkylrest von ca. 10 bis ca. 18 Kohlenstoffatomen. Semipolare nichtionische Tenside sind auch Aminoxide der Formel

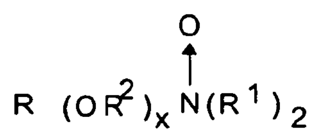

R ist hierbei eine Alkyl-, Hydroxyalkyl- oder Alkylphenolgruppe mit einer Kettenlänge von ca. 8 bis ca. 22 Kohlenstoffatomen, $R^2$ ist eine Alkylen- oder Hydroxyalkylengruppe mit ca. 2 bis 3 Kohlenstoffatomen oder Mischungen hiervon, jeder Rest $R^1$ ist eine Alkyl- oder Hydroxyalkylgruppe mit ca. 1 bis ca. 3 Kohlenstoffatomen oder eine Polyethylenoxidgruppe mit ca. 1 bis ca. 3 Ethylenoxideinheiten und x bedeutet eine Zahl von 0 bis etwa 10. Die $R^1$-Gruppen können miteinander über ein Sauerstoff- oder Stickstoffatom verbunden sein und somit einen Ring bilden. Aminoxide dieser Art sind besonders $C_{10}$-$C_{18}$-Alkyldimethylaminoxide und $C_8$-$C_{12}$-Alkoxiethyl-Dihydroxyethylaminoxide.

Fettsäureamide

Fettsäureamide besitzen die Formel

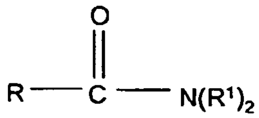

worin R eine Alkylgruppe mit ca. 7 bis ca. 21, bevorzugt ca. 9 bis ca. 17 Kohlenstoffatomen ist und jeder Rest $R^1$ Wasserstoff, $C_1$-$C_4$-Alkyl, $C_1$-$C_4$-Hydroxyalkyl oder $(C_2H_4O)_xH$ bedeutet, wobei x von ca. 1 bis ca. 3 variiert. Bevorzugt sind $C_8$-$C_{20}$-Amide, -monoethanolamide, -diethanolamide und -isopropanolamide.

Weitere geeignete nichtionische Tenside sind Alkyl- und Alkenyloligoglycoside sowie Fettsäurepolyglykolester oder Fettaminpolyglykolester mit jeweils 8 bis 20, vorzugsweise 12 bis 18 C-Atomen im Fettalkylrest, alkoxylierte Triglycamide, Mischether oder Mischformyle, Alkyloligoglycoside, Alkenyloligoglycoside, Fettsäure-N-alkylglucamide, Phosphinoxide, Dialkylsulfoxide und Proteinhydrolysate.

Typische Beispiele für amphotere bzw. zwitterionische Tenside sind Alkylbetaine, Alkylamidbetaine, Aminopropionate, Aminoglycinate, oder amphotere Imidazolinium-Verbindungen der Formel

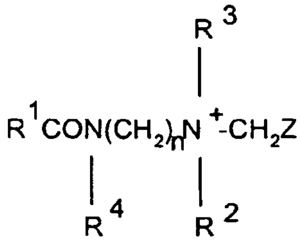

worin $R^1$ $C_8$-$C_{22}$-Alkyl- oder -Alkenyl, $R^2$ Wasserstoff oder $CH_2CO_2M$, $R^3$ $CH_2CH_2OH$ oder $CH_2CH_2OCH_2CH_2CO_2M$, $R^4$ Wasserstoff, $CH_2CH_2OH$ oder $CH_2CH_2COOM$, Z $CO_2M$ oder $CH_2CO_2M$, n 2 oder 3, bevorzugt 2, M Wasserstoff oder ein Kation wie Alkalimetall, Erdalkalimetall, Ammonium oder Alkanolammonium bedeutet.

Bevorzugte amphotere Tenside dieser Formel sind Monocarboxylate und Dicarboxylate. Beispiele hierfür sind Cocoamphocarboxypropionat, Cocoamidocarboxypropionsäure, Cocoamphocarboxyglycinat (oder auch als Cocoamphodiacetat bezeichnet) und Cocoamphoacetat.

Weitere bevorzugte amphotere Tenside sind Alkyldimethylbetaine und Alkyldipolyethoxybetaine mit einem Alkylrest mit ca. 8 bis ca. 22 Kohlenstoffatomen, der linear oder verzweigt sein kann, bevorzugt mit 8 bis 18 Kohlenstoffatomen und besonders bevorzugt mit ca. 12 bis ca. 18 Kohlenstoffatomen. Diese Verbindungen werden z. B. von der Clariant Produkte (Deutschland) GmbH unter dem Handelsnamen Genagen® LAB vermarktet.

Geeignete kationische Tenside sind substituierte oder unsubstituierte geradkettige oder verzweigte quartäre Ammoniumsalze vom Typ $R^1N(CH_3)_3{}^{\rho}X^{\sigma}$, $R^1R^2N(CH_3)_2{}^{\rho}X^{\sigma}$, $R^1R^2R^3N(CH_3){}^{\rho}X^{\sigma}$ oder $R^1R^2R^3R^4N^{\rho}X^{\sigma}$. Die Reste $R^1$, $R^2$, $R^3$ und $R^4$ können vorzugsweise unabhängig voneinander unsubstituiertes Alkyl mit einer Kettenlänge zwischen 8 und 24 C-Atomen, insbesondere zwischen 10 und 18 C-Atomen, Hydroxyalkyl mit ca. 1 bis ca. 4 C-Atomen, Phenyl, $C_2$- bis $C_{18}$-Alkenyl, $C_7$- bis $C_{24}$-Aralkyl, $(C_2H_4O)_xH$, wobei x von ca. 1 bis ca. 3 bedeutet, ein oder mehrere Estergruppen enthaltende Alkylreste oder cyclische quartäre Ammoniumsalze sein. X ist ein geeignetes Anion.

In bevorzugten Ausführungsformen enthalten die erfindungsgemäßen Wasch- und Reinigungsmittel lineares Alkylbenzolsufonat. Die bevorzugten Alkylbenzolsulfonate enthalten lineare Alkylketten mit ca. 9 bis 25 Kohlenstoffatomen, bevorzugt von ca. 10 bis ca. 13 Kohlenstoffatome, das Kation ist Natrium, Kalium, Ammonium, Mono-, Di- oder Triethanolammonium, Calcium oder Magnesium und Mischungen davon. Für milde Tensidsysteme ist Magnesium als Kation bevorzugt, für Standardwaschanwendungen dagegen Natrium.

In ebenso bevorzugten Ausführungsformen enthalten die erfindungsgemäßen Wasch- und Reinigungsmittel sekundäre Alkansulfonate mit lineare Alkylketten mit ca. 9 bis 25 Kohlenstoffatomen, bevorzugt ca. 10 bis ca. 20 Kohlenstoffatome und besonders bevorzugt ca. 13 bis 17 Kohlenstoffatome. Das Kation ist beispielsweise Natrium, Kalium, Ammonium, Mono-, Di- oder Triethanolammonium, Calcium oder Magnesium, und Mischungen davon. Natrium als Kation ist bevorzugt.

In ebenso bevorzugten Ausführungsformen enthalten die erfindungsgemäßen Wasch- und Reinigungsmittel Alkylethersulfate der Formel $RO(A)_m\ SO_3M$, worin R einen unsubstituierten $C_{10}$-$C_{24}$-Alkyl- oder Hydroxyalkylrest, bevorzugt einen $C_{12}$-$C_{20}$-Alkyl- oder Hydroxyalkylrest, besonders bevorzugt $C_{12}$-$C_{18}$-Alkyl- oder Hydroxyalkylrest darstellt. A ist eine Ethoxy- oder Propoxyeinheit, m ist eine Zahl größer als 0, vorzugsweise zwischen ca. 0,5 und ca. 6, besonders bevorzugt zwischen ca. 0,5 und ca. 3 und M ist ein Wasserstoffatom oder ein Kation wie z. B. Natrium, Kalium, Lithium, Calcium, Magnesium, Ammonium oder ein substituiertes Ammoniumkation. Spezifische Beispiele von substituierten Ammoniumkationen sind Methyl-, Dimethyl-, Trimethylammonium- und quaternäre Ammoniumkationen wie Tetramethylammonium und Dimethylpiperidiniumkationen sowie solche, die von Alkylaminen, wie Ethylamin, Diethylamin,

Triethylamin oder Mischungen davon abgeleitet sind. Als Beispiele seien $C_{12}$- bis $C_{18}$-Fettalkoholethersulfate genannt wobei der Gehalt an EO 1, 2, 2.5, 3 oder 4 mol pro mol des Fettalkoholethersulfats beträgt, und in denen M Natrium oder Kalium ist.

Als Emulgatoren kommen in Betracht Anlagerungsprodukte von 0 bis 30 Mol Alkylenoxid, insbesondere Ethylen-, Propylen- und/oder Butylenoxid an lineare oder verzweigte, gesättigte oder ungesättigte Fettalkohole mit 8 bis 22 C-Atomen, an Fettsäuren mit 12 bis 22 C-Atomen, an Alkylphenole mit 8 bis 15 C-Atomen in der Alkylgruppe und an Sorbitanester;

($C_{12}$-$C_{18}$)-Fettsäuremono- und -diester von Anlagerungsprodukten von 0 bis 30 Mol Ethylenoxid an Glycerin;

Glycerinmono- und -diester und Sorbitanmono- und -diester von gesättigten und ungesättigten Fettsäuren mit 6 bis 22 Kohlenstoffatomen und gegebenenfalls deren Ethylenoxidanlagerungsprodukte;

Anlagerungsprodukte von 5 bis 60 Mol, vorzugsweise 15 bis 60 Mol, Ethylenoxid an Rizinusöl und/oder gehärtetes Rizinusöl;

Polyol- und insbesondere Polyglycerinester, wie z. B. Polyglycerinpolyricinoleat und Polyglycerinpoly-12-hydroxystearat.

Bevorzugt sind flüssige Fettsäureester, die sowohl ethoxyliert (PEG-10 Polyglyceryl-2 Laurate) als auch nicht ethoxyliert (Polyglyceryl-2 Sesquiisostearate) sein können.

Weitere bevorzugte erfindungsgemäße Mischungen enthalten Sorbitolester, hergestellt durch Reaktion von Sorbitol mit Fettsäuremethylestern oder Fettsäuretriglyceriden. Der Fettsäurerest in den Fettsäuremethylestern und Fettsäuretriglyceriden enthält im Allgemeinen 8 bis 22 C-Atome und kann geradkettig oder verzweigt, gesättigt oder ungesättigt sein. Beispiele hierfür sind Palmitinsäure, Stearinsäure, Laurinsäure, Linolsäure, Linolensäure, Isostearinsäure oder Ölsäure. Als Fettsäuretriglyceride kommen alle nativen tierischen oder pflanzlichen Öle, Fette und Wachse in Frage, beispielsweise Olivenöl, Rapsöl, Palmkernöl, Sonnenblumenöl, Kokosöl, Leinöl, Ricinusöl, Sojabohnenöl, gegebenenfalls auch in raffinierter oder hydrierter Form. Da diese natürlichen Fette, Öle und Wachse normalerweise Mischungen von Fettsäuren mit unterschiedlicher Kettenlänge darstellen, gilt dies auch für die Fettsäurereste in den erfindungsgemäß eingesetzten Sorbitolestern. Die erfindungsgemäß eingesetzten Sorbitolester können auch alkoxyliert, vorzugsweise ethoxyliert, sein. Des Weiteren können anionische Emulgatoren, wie ethoxylierte und nicht ethoxylierte mono-, di- oder tri-Phosphorsäureester, aber auch kationische Emulgatoren wie mono-, di- und tri-Alkylquats und deren polymere Derivate eingesetzt werden.

Ebenfalls geeignet sind Gemische von Verbindungen aus mehreren dieser Substanzklassen.

Weitere Wasch- und Reinigungsmittelinhaltsstoffe, die in der vorliegenden Erfindung enthalten sein können, umfassen anorganische und/oder organische Gerüststoffe, um den Härtegrad des Wassers zu mindern.

Diese Gerüststoffe können mit Gewichtsanteilen von etwa 5 bis etwa 80 % in den Wasch- und Reinigungsmittelzusammensetzungen enthalten sein. Anorganische Gerüststoffe umfassen beispielsweise Alkali-, Ammonium- und Alkanolammoniumsalze von Polyphosphaten wie etwa Tripolyphosphate, Pyrophosphate und glasartige polymere Metaphosphate, Phosphonaten, Silikaten, Carbonaten einschließlich Bicarbonate und Sesquicarbonate, Sulfaten und Aluminosilikaten.

Beispiele für Silikatgerüststoffe sind die Alkalimetallsilikate, insbesondere diejenigen mit einem $SiO_2$:$Na_2O$-Verhältnis zwischen 1,6:1 und 3,2:1 sowie Schichtsilikate, beispielsweise Natriumschichtsilikate, wie beschrieben in US-4,664,839, erhältlich von Clariant Produkte (Deutschland) GmbH unter der Marke SKS®. SKS-6® ist ein besonders bevorzugter Schichtsilikatgerüststoff.

Aluminosilikatgerüststoffe sind für die vorliegende Erfindung besonders bevorzugt. Es handelt sich dabei insbesondere um Zeolithe mit der Formel $Na_z[(AlO_2)_z(SiO_2)y]\cdot xH_2O$, worin z und y ganze Zahlen von mindestens 6 bedeuten, das Verhältnis von z zu y zwischen 1,0 bis etwa 0,5 liegt, und x eine ganze Zahl von etwa 15 bis etwa 264 bedeutet.

Geeignete Ionentauscher auf Aluminosilikatbasis sind im Handel erhältlich. Diese Aluminosilikate können von kristalliner oder amorpher Struktur sein, und können natürlich vorkommend oder auch synthetisch hergestellt sein. Verfahren für die Herstellung von Ionentauschern auf Aluminosilikatbasis werden beschrieben in US-3,985,669 und US-4,605,509. Bevorzugte Ionentauscher auf der Basis synthetischer kristalliner Aluminosilikate sind erhältlich unter der Bezeichnung Zeolith A, Zeolith P(B) (einschließlich der in EP-A-0 384 070 offenbarten) und Zeolith X. Bevorzugt sind Aluminosilikate mit einem Partikeldurchmesser zwischen 0,1 und 10 $\mu$m.

Geeignete organische Gerüststoffe umfassen Polycarboxylverbindungen, wie beispielsweise Etherpolycarboxylate und Oxydisuccinate, wie beispielsweise in US-3,128,287 und US-3,635,830 beschrieben. Ebenfalls soll auf "TMS/TDS"-Gerüststoffe aus US-4,663,071 verwiesen werden.

Andere geeignete Gerüststoffe umfassen die Etherhydroxypolycarboxylate, Copolymere von Maleinsäureanhydrid mit Ethylen oder Vinylmethylether, 1,3,5-Trihydroxybenzol-2,4,6-trisulfonsäure und Carboxymethyloxybernsteinsäure, die Alkali-, Ammonium- und substituierten Ammoniumsalze von Polyessigsäuren wie z. B. Ethylendiamintetraessigsäure und Nitrilotriessigsäure, sowie Polycarbonsäuren, wie Mellithsäure, Bernsteinsäure, Oxydibernsteinsäure, Polymaleinsäure, Benzol-1,3,5-tricarbonsäure, Carboxymethyloxybernsteinsäure, sowie deren lösliche Salze.

Gerüststoffe auf Citratbasis, z. B. Zitronensäure und ihre löslichen Salze, insbesondere das Natriumsalz, sind bevorzugte Polycarbonsäuregerüststoffe, die auch in granulierten Formulierungen, insbesondere zusammen mit Zeolithen und/oder Schichtsilikaten verwendet werden können.

Weitere geeignete Gerüststoffe sind die 3,3-Dicarboxy-4-oxa-1,6-hexandioate und die verwandten Verbindungen, die in US-4,566,984 offenbart sind.

Wenn Gerüststoffe auf Phosphorbasis verwendet werden können, und insbesondere wenn Seifenstücke für die Wäsche von Hand formuliert werden sollen, können verschiedene Alkalimetallphosphate wie etwa Natriumtripolyphosphat, Natriumpyrophosphat und Natriumorthophosphat verwendet werden. Ebenfalls können Phosphonatgerüststoffe, wie Ethan-1-hydroxy-1,1-diphosphonat und andere bekannte Phosphonate wie sie beispielsweise in US-3,159,581, US-3,213,030, US-3,422,021, US-3,400,148 und US-3,422,137 offenbart sind, verwendet werden.

Die Wasch- und Reinigungsmittelzusammensetzungen der vorliegenden Erfindung können gegebenenfalls einen oder mehrere konventionelle Bleichmittel enthalten, sowie Aktivatoren oder Stabilisatoren, insbesondere Peroxysäuren, die nicht mit den erfindungsgemäßen Polyestern reagieren.

Die Peroxysäure kann entweder eine freie Peroxysäure sein, oder eine Kombination aus einem anorganischen Persalz, beispielsweise Natriumperborat oder Natriumpercarbonat und einem organischen Peroxysäure-Vorläufer, der zu einer Peroxysäure umgewandelt wird, wenn die Kombination des Persalzes und des Peroxysäure-Vorläufers in Wasser aufgelöst wird. Die organischen Peroxysäure-Vorläufer werden im Stand der Technik oft als Bleichaktivatoren bezeichnet.

Beispiele für Peroxysäuren, die für die Verwendung in dieser Erfindung bevorzugt sind, umfassen die Peroxydodecandisäure (DPDA), das Nonylamid der Peroxybernsteinsäure (NAPSA), das Nonylamid der Peroxyadipinsäure (NAPAA) und Decyldiperoxybernsteinsäure (DDPSA). Die Peroxysäure ist vorzugsweise in einem löslichen Granulat enthalten, entsprechend der Methode aus US-4,374,035. Ein bevorzugtes Bleichgranulat enthält, in Gewichtsprozenten, 1 % bis 50 % einer exotherm löslichen Verbindung, wie beispielsweise Borsäure; 1 % bis 25 % eines mit der Peroxysäure verträglichen oberflächenaktiven Wirkstoffes, wie beispielsweise C13LAS; 0,1 % bis 10 % eines oder mehrerer Chelatstabilisatoren, wie beispielsweise Natriumpyrophosphat; und 10 % bis 70 % eines wasserlöslichen Salzes, wie beispielsweise Natriumsulfat.

Das peroxysäurehaltige Bleichmittel wird in Mengen verwendet, die eine Menge von verfügbarem Sauerstoff zwischen etwa 0,1 % bis etwa 10 %, vorzugsweise zwischen etwa 0,5 % bis etwa 5 %, insbesondere von etwa 1 % bis 4 % ergeben.

Die Prozentangaben beziehen sich auf das Gesamtgewicht der Reinigungsmittelzusammensetzung.

Geeignete Mengen des peroxysäurehaltigen Bleichmittels, bezogen auf eine Einheitsdosis den erfindungsgemäßen Waschmittelzusammensetzungen, wie sie für eine typische Waschflotte verwendet wird, die etwa 65 Liter Wasser von 15 bis 60 °C umfasst, erzeugen zwischen etwa 1 ppm bis etwa 150 ppm verfügbaren Sauerstoffs, vorzugsweise zwischen etwa 2 ppm bis etwa 20 ppm verfügbaren Sauerstoffs. Die Waschflotte sollte einen pH-Wert zwischen 7 und 11 aufweisen, vorzugsweise zwischen 7,5 und 10,5, um ein hinreichendes Bleichergebnis zu erzielen. Es wird auf Spalte 6, Zeilen 1 bis 10 von US-4,374,035 verwiesen.

Alternativ dazu kann die Bleichmittelzusammensetzung einen geeigneten organischen Peroxysäurevorläufer enthalten, der eine der oben genannten Peroxysäuren erzeugt, wenn er in wässriger alkalischer Lösung mit Wasserstoffperoxid reagiert. Die Quelle des Wasserstoffperoxids kann jedes anorganische Peroxid sein, das in wässriger Lösung Wasserstoffperoxid freisetzt, wie etwa Natriumperborat (Monohydrat und Tetrahydrat) und Natriumpercarbonat.

An Bleichaktivatoren stehen zur Verfügung N,N,N',N'-Tetraacetylethylendiamin (TAED), Glucosepentaacetat (GPA), Xylosetetraäcetat (TAX), Natrium-4-benzoyloxy-benzolsulfonat (SBOBS), Natriumtrimethylhexanoyloxybenzolsulfonat (STHOBS), Tetraacetylglucoluril (TAGU), Tetraacetylcyansäure (TACA), Di-N-acetyldimethylglyoxin (ADMG) und 1-Phenyl-3-acetylhydantoin (PAH), Nonanoylcaprolactamphenyl-sulfonatester (APES), Nonanoylphenylsulphonatester (NOPS), Nitrilotriacetat (NTA) und Ammoniumnitrile.

Die erfindungsgemäßen Wasch- und Reinigungsmittelzusammensetzungen können ein oder mehrere konventionelle Enzyme enthalten. Solche Enzyme sind z. B. Lipasen, Amylasen, Proteasen, Cellulasen. Pullinasen, Cutinasen, Peroxidasen. An Proteasen stehen zur Verfügung BLAP®, Opticlean®, Maxacal®, Maxapem®, Esperase®, Savinase®, Purafect®, OxP und/oder Duraxym®, an Amylasen Termamyl®, Amylase-LT®, Maxamyl®, Duramyl® und/oder Pruafect® OxAm, an Lipasen, Lipolase®, Lipomax®, Lumafast® und/oder Lipozym®.

Ein bevorzugtes Enzym ist Cellulase. Die hierbei verwendete Cellulase kann aus Bakterien oder Pilzen gewonnen sein und soll einen optimalen pH-Bereich zwischen 5 und 9,5 aufweisen. Bevorzugte Cellulasen sind in WO-91/17 243 beschrieben.

Ebenfalls bevorzugte Enzyme sind Lipasen, die als fettspaltende Enzyme eine bessere Ablösung nativer Öle und Fette von angeschmutzten Geweben ermöglichen und so die erfindungsgemäßen Polyester in ihrer Wirkung unterstützen, wobei generell additive, wie auch synergistische Wirkungen erzielt werden können.

Die Enzyme können an Trägersubstanzen adsorbiert werden und/oder in Hüllsubstanzen eingebettet sein.

Bezogen auf das Gewicht der Wasch- und Reinigungsmittelzusammensetzungen, die die erfindungsgemäßen Polyester enthalten, beträgt der Anteil der Enzyme mindestens 0,001 Gew.-%, bevorzugt zwischen etwa 0,001 bis etwa 5 Gew.-%, insbesondere von etwa 0,001 bis etwa 1 Gew.-%, speziell von etwa 0,01 bis etwa 1 Gew.-%.

An Sequestriermittel stehen zu Verfügung Natriumtripolyphosphat (STPP), Ethylendiamintetraessigsäure (EDTA), salze,

Nitrilotriessigsäure (NTA), Polyacrylat, Phosphonat, Oxalsäure, -salz, Zitronensäure, Zeolith, kondensierte Phosphate, Carbonate, Polycarbonate.

Als Vergrauungsinhibitoren kommen in Betracht Carboxymethylcellulose, Methylcellulose, Hydroxyalkylcellulose, Methylhydroxyethylcellulose, Methylhydroxypropylcellulose, Methylcarboxymethylcellulose und Polyvinylpyrrolidon.

Auch Farbübertragungsinhibitoren kommen in Betracht, beispielsweise Polyamin-N-oxide wie etwa Poly-(4-vinylpyridin-N-oxid), z. B. Chromabond S-400, Fa. ISP; Polyvinylpyrrolidon, z. B. Sokalan® HP 50/ Fa. BASF und Copolymere von N-Vinylpyrrolidon mit N-Vinylimidazol und gegebenenfalls anderen Monomeren.

Die Erfindung schließt Wasch- und Reinigungsmittel, enthaltend Farbfixiermittel als Wirksubstanzen ein, beispielsweise Farbfixiermittel, die erhalten werden durch Umsetzung von Diethylentriamin, Dicyandiamid und Amidoschwefelsäure, Aminen mit Epichlorhydrin, beispielsweise Dimethylaminopropylamin und Epichlorhydrin oder Dimethylamin und Epichlorhydrin oder Dicyandiamid, Formaldehyd und Ammoniumchlorid, oder Dicyandiamid, Ethylendiamin und Formaldehyd oder Cyanamid mit Aminen und Formaldehyd oder Polyaminen mit Cyanamiden und Amidoschwefelsäure oder Cyanamiden mit Aldehyden.und Ammoniumsalzen, aber auch Polyamin-N-oxide wie etwa Poly-(4-vinylpyridin-N-oxid), z. B. Chromabond S-400, Fa. ISP; Polyvinylpyrrolidon, z. B. Sokalan® HP 50/ Fa. BASF und Copolymere von N-Vinylpyrrolidon mit N-Vinylimidazol und gegebenenfalls anderen Monomeren.

Die erfindungsgemäßen Wasch- und Reinigungsmittel können Komplexbildner, beispielsweise Aminocarboxylate, wie Ethylendiamintetraacetat, N-Hydroxyethylethylendiamintriacetat, Nitrilotriacetat, Ethylendiamintetrapropionat, Triethylentetraaminhexaacetat, Diethylentriaminpentaacetat, Cyclohexandiamintetraacetat, Phosphonate, beispielsweise Azacycloheptandiphosphonat, Na-Salz, Pyrophosphate, Etidronsäure (1-Hydroxyethyliden-1,1-diphosphonsäure, 1-Hydroxyethyan-1,1-diphosphonsäure, Acetophosphonsäure) und ihre Salze, Aminophosphonate, wie Ethylendiamintetrakis (methylenphosphonat), Diethylentriaminpentakis(methylenphosphonat), Amintrimethylenphosphonsäure, Cyclodextrine, sowie polyfunktionell substituierte aromatische Komplexbildner, wie Dihydroxydisulfobenzol oder Ethylendiamindisuccinate enthalten.

Als optische Aufheller können eingesetzt werden cyclische Kohlenwasserstoffe wie Distyrylbenzole, Distyrylbiphenyle, Diphenylstilbene, Triazinylaminostilbene, Stilbenyl-2H-triazole, beispielsweise Stilbenzyl-2H-naphthol-[1,2-d]triazole und Bis(1,2,3-triazol-2-yl)stilbene, Benzoxazole, beispielsweise Stilbenylbenzoxazol und Bis(benzoxazol), Furane, Benzofurane und Benzimidazole, beispielsweise Bis(benzo[b]furan-2-yl)biphenly und cationische Benzimidazole, 1,3-Diphenyl-2-pyrazolin, Cumarin, Naphthalimide, 1,3,5-2-yl-Derivate, Methincyanin und Dibenzothiophen-5,5-oxid.

Bevorzugt sind anionische optische Aufheller, insbesondere sulfonierte Verbindungen.

Des Weiteren kommen in Betracht Triazinylaminostilbene, Distyrylbiphenyle und Mischungen daraus, 2-(4-Styrylphenyl)-2H-naphtho[1,2-d]triazol, 4,4'-Bis-(1,2,3-triazol-2-yl)stilben, Aminocumarin, 4-Methyl-7-Ethylaminocumarin, 1,2-bis(benzimidazol-2-yl)ethylen, 1,3-Diphenylphrazolin, 2,5-Bis(benzooxazol-2-yl)thiophene, 2-Stryl-naphtho[1,2-d]oxazol, 2-(4-styryl-3-sulfophenyl)-2H-naphtho[1,2-d]triazol und 2-(Stilben-4-yl)-2H-naphthol[1,2-d]triazol.

Die erfindungsgemäßen Waschmittel können optische Aufheller in Mengen von 0,001 Gew.-% bis 2 Gew.-%, bevorzugt 0,002 Gew.-% bis 0,8 Gew.-%, besonders bevorzugt 0,003 Gew.-% bis 0,4 Gew.-% enthalten.

Als weich machende Komponenten werden quartäre Ammoniumsalze vom Typ

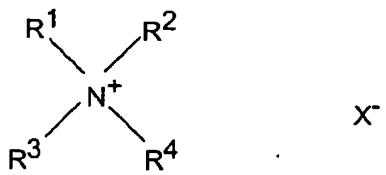

eingesetzt, worin

| | |
|---|---|
| $R^1$ | = $C_8$-$C_{24}$ n-, bzw. iso-Alkyl, bevorzugt $C_{10}$-$C_{18}$ n-Alkyl |
| $R^2$ | = $C_1$-$C_4$-Alkyl, bevorzugt Methyl |
| $R^3$ | = $R^1$ oder $R^2$ |
| $R^a$ | = $R^2$ oder Hydroxyethyl oder Hydroxypropyl oder deren Oligomere |
| $X^-$ | = Bromid, Chlorid, Jodid, Methosulfat, Acetat, Propionat, Lactat sind. |

Beispiele hierfür sind Distearyldimethylammoniumchlorid, Ditalgalkyldimethylammoniumchlorid, Ditalgalkylmethylhydroxypropyl-ammoniumchlorid, Cetyltrimethylammoniumchlorid oder auch die entsprechenden Benzylderivate wie etwa Dodecyldimethylbenzylammoniumchlorid. Cyclische quartäre Ammoniumsalze, wie etwa Alkyl-Morpholinderivate

können ebenfalls verwendet werden.

Darüber hinaus können neben den quartären Ammoniumverbindungen Imidazolinium-Verbindungen (1) und Imidazolinderivate (2) eingesetzt werden.

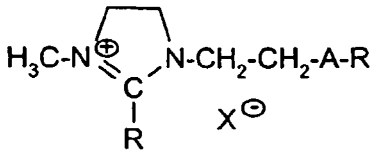

(1)

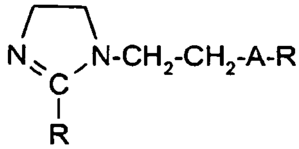

(2)

worin

| | |
|---|---|
| R | = $C_8$-$C_{24}$ n-, bzw. iso-Alkyl, bevorzugt $C_{10}$-$C_{18}$ n-Alkyl |
| X | = Bromid, Chlorid, Jodid, Methosulfat |
| A | = -NH-CO-, -CO-NH-, -O-CO-, -CO-O- |

ist.

Eine besonders bevorzugte Verbindungsklasse sind die so genannten Esterquats. Es handelt sich hierbei um Umsetzungsprodukte von Alkanolaminen und Fettsäuren, die anschließend mit üblichen Alkylierungs- oder Hydroxyalkylierungsagenzien quaterniert werden.

Bevorzugt als Alkanolamine sind Verbindungen gemäß der Formel

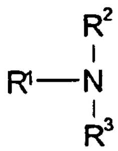

mit
$R^1$ = $C_1$-$C_3$ Hydroxyalkyl, bevorzugt Hydroxyethyl und
$R^2$, $R^3$ = $R^1$ oder $C_1$-$C_3$ Alkyl, bevorzugt Methyl.
Besonders bevorzugt sind Triethanolamin und Methyldiethanolamin.

Weitere besonders bevorzugte Ausgangsprodukte für Esterquats sind Aminoglycerinderivate, wie z. B. Dimethylaminopropandiol.
Alkylierungs- bzw. Hydroxyalkylierungsagenzien sind Alkylhalogenide, bevorzugt Methylchlorid, Dimethylsulfat, Ethylenoxid und Propylenoxid.

Beispiele für Esterquats sind Verbindungen der Formeln:

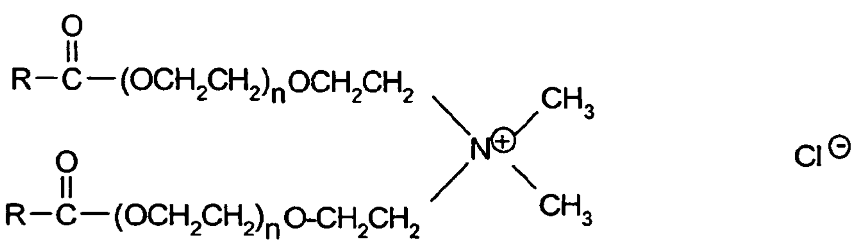

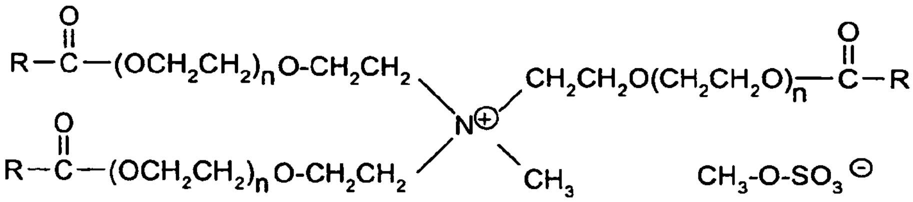

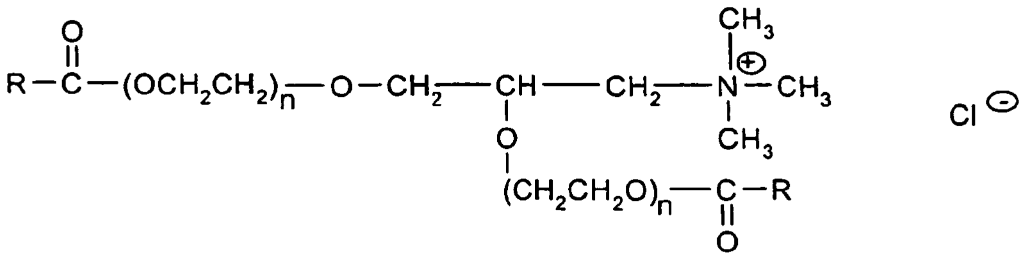

wobei R-C-O abgeleitet ist von $C_8$-$C_{24}$-Fettsäuren, die gesättigt oder ungesättigt sein können. Beispiele hierfür sind Capronsäure, Caprylsäure, hydrierte oder nicht oder nur teilweise hydrierte Talgfettsäuren, Stearinsäure, Ölsäure, Linolensäure, Behensäure, Palminstearinsäure, Myristinsäure und Elaidinsäure. n liegt im Bereich von 0 bis 10, vorzugsweise 0 bis 3, besonders bevorzugt 0 bis 1. Weitere bevorzugte Wäscheweichspülerrohstoffe mit denen die erfindungsgemäßen Polyester kombiniert werden können sind Amido-Amine auf der Basis von beispielsweise Dialkyltriaminen und langkettigen Fettsäuren, sowie deren Oxethylate bzw. quaternierten Varianten. Diese Verbindungen besitzen folgende Struktur:

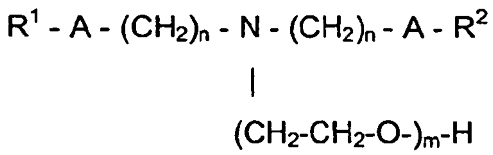

worin

| | |
|---|---|
| $R^1$ und $R^2$ | unabhängig voneinander $C_8$ - $C_{24}$ n- bzw. iso-Alkyl, bevorzugt $C_{10}$-$C_{18}$ n-Alkyl, |
| A | -CO-NH- oder -NH-CO-, |
| n | 1 - 3, bevorzugt 2, |
| m | 1 - 5, bevorzugt 2 - 4 |

bedeuten.

Durch Quaternierung der tertiären Aminogruppe kann zusätzlich ein Rest $R^3$, welcher $C_1$-$C_4$-Alkyl, bevorzugt Methyl, sein kann und ein Gegenion X, welches Chlorid, Bromid, Jodid oder Methylsulfat sein kann, eingeführt werden. Amidoaminooxethylate bzw. deren quaternierten Folgeprodukte werden unter den Handelsnamen Varisoft® 510, Varisoft® 512, Rewopal® V 3340 und Rewoquat® W 222 LM angeboten.

Die bevorzugten Anwendungskonzentrationen der erfindungsgemäß eingesetzten Polyester in den Weichspülerformulierungen entsprechen denen, die für Waschmittelformulierungen genannt sind.

Die erfindungsgemäßen Wasch- und Reinigungsmittel enthalten vorzugsweise Farbstoffe und Duft- bzw. Parfümstoffe.

Bevorzugt eingesetzt werden Lösungen oder Emulsionen der oben genannten Duftstoffe und Parfümöle, die nach gängigen Methoden hergestellt werden können.

Ein weiterer Gegenstand der Erfindung sind feste Geschirrreinigungsmittel, die die oben definierten Polyester enthalten. Hierbei handelt es sich um Mittel zum Reinigen von glas, Porzellan, Besteck, Metall- und Kunststoffartikeln in der Maschine. Die Polyester entsprechend der vorliegenden Erfindung bewirken ein sehr gutes Ablaufverhalten des Spül- bzw. Klarspülwassers an den Oberflächen der genannten Artikel. Dadurch verkürzt sich die Trocknungszeit in der Spülmaschine und man erreicht ein rückstandloses und fleckenfreies Spülgut. Außerdem sind diese Polyester sehr gut wasserlöslich und erlauben damit eine Reduzierung der Menge an Spülwasser.

Der Gehalt an erfindungsgemäß eingesetzten Polyestern in festen Geschirrspülmittelformulierungen für die Maschine kann in breiten Grenzen schwanken und beträgt im Allgemeinen 0,1 bis 10 Gew.-%, vorzugsweise 0,5 bis 5

Gew.-%, besonders bevorzugt 1 bis 3 Gew.-% bezogen auf die jeweilige Formulierung.

Die festen Geschirrreinigungsmittel für die Maschine können als Pulver, Granulate oder in Form von Tabletten dargeboten werden.

Die Herstellung der erfindungsgemäßen festen Geschirrreinigungsmittel bietet keine Schwierigkeiten und kann auf bekannte Weise erfolgen. Die pulver- oder granulatförmigen erfindungsgemäßen Mittel können durch einfaches Vermischen der pulver- oder granulatförmigen Polyester mit den weiteren Inhaltsstoffen der Geschirrspülmittelformulierung in den entsprechenden Einsatzmengen erfolgen.

Die festen Geschirrreinigungsmittel können auch als extrudierte Formkörper dargeboten werden. Dabei wird ein festes und im wesentlichen rieselfähiges Gemisch aus den Inhaltsstoffen oder einem Teil der Inhaltsstoffe der Geschirrreinigungsformulierung unter Druck strangförmig verpresst und der Strang nach Austritt aus der Lochform mittels einer Schneidevorrichtung auf die vorbestimmbare Granulatdimension zugeschnitten.

Eine bevorzugte erfindungsgemäße Ausführungsform sind Geschirrreinigungsmittel in Tablettenform, die einphasig oder mehrphasig, einfarbig oder mehrfarbig und insbesondere aus einer Schicht oder aus mehreren, insbesondere aus zwei Schichten bestehen können.

Man geht vorzugsweise derart vor, dass man alle Bestandteile - gegebenenfalls je einer Schicht - in einem Mischer miteinander vermischt und das Gemisch mittels herkömmlicher Tablettenpressen, beispielsweise Exzenterpressen oder Rundläuferpressen verpresst. Insbesondere bei mehrschichtigen Tabletten kann es von Vorteil sein, wenn mindestens eine Schicht vorverpresst wird. Vorzugsweise weist eine derart hergestellte Tablette ein Gewicht von 10 g bis 50 g, insbesondere von 15 g bis 40 g auf. Die Raumform der Tabletten ist beliebig und kann rund, oval oder eckig sein, wobei auch Zwischenformen möglich sind. Ecken und Kanten sind vorteilhafterweise abgerundet. Runde Tabletten weisen vorzugsweise einen Durchmesser von 30 mm bis 40 mm auf. Insbesondere die Größe von eckig oder quaderförmig gestalteten Tabletten, welche überwiegend über die Dosiervorrichtung beispielsweise der Geschirrspülmaschine eingebracht werden, ist abhängig von der Geometrie und dem Volumen dieser Dosiervorrichtung. Beispielhaft bevorzugte Ausführungsformen weisen eine Grundfläche von (20 bis 30 mm) x (34 bis 40 mm), insbesondere von 26 x 36 mm oder von 24 x 38 mm auf.

Die Geschirreinigungsmittel in Tablettenform können Tablettensprengmittel enthalten. In Betracht kommen Substanzen wie Stärke, Cellulose und CelluloseDerivate, Alginate, Dextrane, quervernetzte Polyvinylpyrrolidone, sowie Systeme aus schwachen Säuren und carbonathaltigen Mitteln, beispielsweise Citronensäure und Weinsäure in Kombination mit Hydrogencarbonat oder Carbonat, aber auch feinteilige und quellfähige Schichtsilikate von der Art der Bentonite und Smektite. Auch zur Gasbildung beitragende Substanzen wie Citronensäure, Bisulfat, Bicarbonat, Carbonat und Percarbonat können als mögliche Zerfallhilfsmittel eingesetzt werden.

Die Tablettensprengmittel werden in sehr feinteiliger Form entweder vor dem Verpressen mit den sonstigen Tabletteninhaltsstoffen, die feinteilig oder granular, aber auch flüssig bis pastenförmig vorliegen können, vermischt oder die sonstigen Tabletteninhaltsstoffe werden mit dem Tablettensprengmittel überzogen bzw. abgepudert.

Die festen Geschirreinigungsmittel enthalten die üblichen Bestandteile, ausgewählt im wesentlichen aus Tensiden, bevorzugt nichtionischern Tensiden, Enzymen, Aminosäuren und -salze, Builder, Co-Builder, Bleichmittel, organischen Säuren, Hydrotropen, Farb- und Duftstoffe, weiteren spezifischen Hilfs- und Zusatzstoffen wie beispielsweise Antioxidantien, Zeolithe, Salze, Bleichaktivatoren, Bleichkatalysatoren, photoaktiven Metalloxiden, photoaktiven Nanopartikelnn, Photoaktivatoren, enzymstabilisierenden Zusätzen, Fungiziden, Bakteriziden, Belagsinhibitoren, antistatischen Zusätzen, Schaumregulatoren, Farbübertragungsinhibitoren, Geruchsfängern, Polymeren, Pigmenten, Mittel zur pH-Kontrolle, Mittel zur UV-Absorption, optische Aufheller, Dispergier-, Komplexierungs-, Konservierungs- und Glaskorrosionsmittel.

In den Geschirreinigungsmitteln für die Maschine werden schaumarme Verbindungen bevorzugt. Dies sind vor allem nichtionische Tenside, vorzugsweise alkoxylierte, vorteilhafterweise ethoxylierte, insbesondere primäre Alkohole mit vorzugsweise 8 bis 22 C-Atomen und durchschnittlich 1 bis 25 Mol Ethylenoxid (EO) pro Mol Alkohol, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 10 bis 20 C-Atomen, z. B. aus Kokos-, Palm-, Talgfett- oder Oleylalkohol, und durchschnittlich 2 bis 18 EO pro Mol Alkohol bevorzugt. Der Ethoxylierungsgrad stellt einen statistischen Mittelwert dar, der für ein spezielles Produkt eine ganze oder gebrochene Zahl sein kann. Die Alkoholethoxylate können eine eingeengte oder breite Homologenverteilung des Ethylenoxids aufweisen (narrow range ethoxylates oder broad range ethoxylates). Unter diese Produktklasse fallen die Genapol® TM-Marken der Firma Clariant Produkte (Deutschland) GmbH.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester.

Eine weitere Klasse von nichtionischen Tensiden, die vorteilhaft eingesetzt werden kann, sind Alkylpolyglykoside (APG), beispielsweise solche der allgemeinen Formel $RO(G)_z$, in der R für einen linearen oder verzweigten, insbesondere in 2-Stellung methylverzweigten, gesättigten oder ungesättigten, aliphatischen Rest mit 8 bis 22, vorzugsweise 12 bis 18 C-Atomen bedeutet und G für eine Glykoseeinheit mit 5 oder 6 C-Atomen, vorzugsweise für Glykose, steht. Der Glykosierungsgrad z liegt dabei zwischen 1 und 4, vorzugsweise zwischen 1 und 2. Bevorzugt eingesetzt werden lineare Alkylpolyglykoside, also Alkylpolyglykoside, die aus einem Glykoserest und einer n-Alkylkette bestehen.

Auch nichtionische Tenside vom Typ der Aminoxide, beispielsweise N-Cokosalkyl-N,N-dimethylaminoxid und N-Talgalkyl-N,N-dihydroxyethylaminoxid und Fettsäurealkanolamide können geeignet sein. Die Menge dieser nichtionischer Tenside beträgt vorzugsweise nicht mehr als die der ethoxylierten Fettalkohole, insbesondere nicht mehr als die Hälfte davon.

Weiterhin geeignet sind Niotenside der allgemeinen Formel

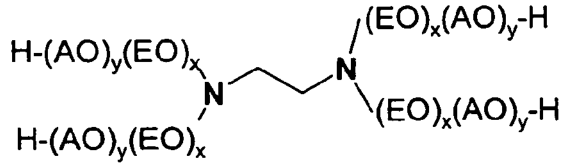

,

die alternierende Ethylenoxid- und Alkylenoxideinheiten, bevorzugt Propylenoxideinheiten aufweisen und die EO- und AO-Einheiten statistisch verteilt oder blockartig angeordnet sein können. Unter diesen sind wiederum Tenside mit EO-AO-EO-AO-Blöcken bevorzugt, wobei jeweils eine bis zehn EO- bzw. AO-Gruppen aneinander gebunden sind, bevor ein Block aus den jeweils anderen Gruppen folgt und die Indizes x und y unabhängig voneinander für ganze Zahlen von 1 bis 10 stehen.

Niotenside, die mit besonderem Vorzug eingesetzt werden können, sind beispielsweise unter dem Handelsnamen Genapol® ED der Firma Clariant Produkte (Deutschland) GmbH erhältlich.

Weitere geeignete Tenside sind Polyhydroxyfettsäureamide der allgemeinen Formel

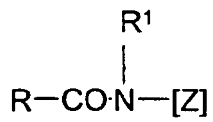

in der RCO für einen aliphatischen Acylrest mit 6 bis 22 Kohlenstoffatomen, $R^1$ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxygruppen steht. Bei den Polyhydroxyfettsäureamiden handelt es sich um bekannte Stoffe, die üblicherweise durch reduktive Aminierung eines reduzierenden Zuckers mit Ammoniak, einem Alkyamin oder einem Alkanolamin und nachfolgende Acylierung mit einer Fettsäure, einem Fettsäurealkylester oder einem Fettsäurechlorid erhalten werden können.

Zur Gruppe der Polyhydroxyfettsäureamide gehören auch Verbindungen der nachstehenden Formel

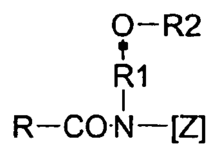

in der R für einen linearen oder verzweigten Alkyl- oder Alkylenrest mit 7 bis 12 Kohlenstoffatomen, $R^1$ für einen linearen, verzweigten oder cyclischen Alkylrest oder einen Arylrest mit 2 bis 8 Kohlenstoffatomen und $R^2$ für einen linearen, verzweigten oder cyclischen Alkylrest oder einen Arylrest oder einen Oxy-Alkylrest mit 1 bis 8 Kohlenstoffatomen steht, wobei $C_{1-4}$-Alkyl- oder Phenylreste bevorzugt sind und [Z] für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes. [Z] wird vorzugsweise durch reduktive Aminierung eines reduzierten Zuckers erhalten, beispielsweise Glucose, Fructose, Maltose, Lactose, Galactose, Mannose oder Xylose. Die N-Alkoxy- oder N-Aryloxy-substituierten Verbindungen können dann durch Umsetzung mit Fettsäuremethylestern in Gegenwart eines Alkoxids als Katalysator in die gewünschten Polyhydroxyfettsäureamide überführt werden.

Als besonders bevorzugte Niotenside haben sich schwach schäumende Niotenside erwiesen, die alternierende Ethylenoxid- und Alkylenoxideinheiten, bevorzugt Propoxylenoxideinheiten aufweisen und die EO- und AO-Einheiten statistisch verteilt oder blockartig angeordnet sein können. Unter diesen sind wiederum Tenside mit EO-AO-EO-AO-Blöcken bevorzugt, wobei jeweils eine bis zehn EO- bzw. AO-Gruppen aneinander gebunden sind, bevor ein Block aus den jeweils anderen Gruppen folgt.

Hier sind Klarspülmittel bevorzugt, die als nichtionische(s) Tensid(e) Tenside der allgemeinen Formel

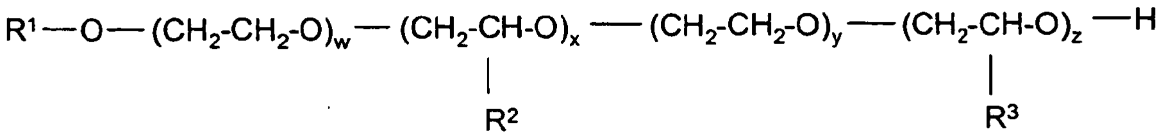

in der $R^1$ für einen geradkettigen oder verzweigten, gesättigten oder ein- bzw. mehrfach ungesättigten $C_{6-30}$-Alkyl- oder -Alkenylrest steht; jede Gruppe $R^2$ bzw. $R^3$ unabhängig voneinander $-CH_3$, $-CH_2CH_3$, $-CH_2CH_2-CH_3$, $-CH(CH_3)_2$ ist, und die Indizes w, x, y und z unabhängig voneinander für ganze Zahlen von 1 bis 10 stehen. Die bevorzugten Niotenside der Formel (IV) lassen sich durch bekannte Methoden aus den entsprechenden Alkoholen $R^1$-OH und Ethylen- bzw. Alkylenoxid herstellen. Der Rest R1 in der allgemeinen Formel (IV) kann je nach Herkunft des Alkohols variieren. Werden native Quellen genutzt, weist der Rest $R^1$ eine gerade Anzahl von Kohlenstoffatomen auf und ist in der Regel unverzweigt, wobei die linearen Reste aus Alkoholen nativen Ursprungs mit 12 bis 22 Kohlenstoffatomen, z. B. aus Lauryl-, Kokos-, Palmfett-, Palmkern-, Stearyl-, Isostearyl-, Oleyl-, Capron-, Capryl-, Caprin-, 2-Ethylhexyl-, Isotridecyl-, Myristyl-, Cetyl-, Elaidyl-, Petroselinyl-, Arachyl-, Gadoleyl-, Behenyl-, Erucyl-, Brassidylalkohol bevorzugt sind. Aus synthetischen Quellen zugängliche Alkohole sind beispielsweise Guerbetalkohole oder in 2-Stellung methylverzweigte bzw. lineare und methylverzweigte Reste im Gemisch, so wie sie üblicherweise in Oxoalkoholresten vorliegen. Bevorzugt steht dabei der Rest $R^1$ in Formel (IV) für einen Alkylrest mit 6 bis 30, vorzugsweise 8 bis 18 Kohlenstoffatomen.

Als Alkylenoxideinheit, die alternierend zur Ethylenoxideinheit in den bevorzugten Niotensiden enthalten ist, kommt neben Propylenoxid insbesondere Butylenoxid in betracht. Aber auch weitere Alkylenoxide, bei denen $R^2$ und $R^3$ unabhängig voneinander ausgewählt sind aus $-CH_2CH_2-CH_3$ oder $-CH(CH_3)_2$ sind geeignet. Bevorzugt stehen $R^2$ und $R^3$ für einen Methylrest. Niotenside, die mit besonderem Vorzug eingesetzt werden können, sind beispielsweise unter dem Namen Genapol® EP 2564 und Genapol® EP 2584 der Firma Clariant Produkte (Deutschland) GmbH erhältlich.

Als bevorzugte zusätzliche Tenside werden schwach schäumende nichtionische Tenside eingesetzt. Mit besonderem Vorzug ist ein nichtionisches Tensid enthalten, das einen Schmelzpunkt oberhalb der Raumtemperatur aufweist. Demzufolge sind bevorzugte Mittel dadurch gekennzeichnet, dass sie nichtionische(s) Tensid(e) mit einem Schmelzpunkt oberhalb von 20 °C, bevorzugt zwischen 25 und 50 °C und insbesondere zwischen 25 und 45 °C enthalten. Zusätzlich zu den Niotensiden, die Schmelz- oder Erweichungspunkte im oben genannten Temperaturbereich aufweisen, sind nichtionsche Tenside geeignet, die bei Raumtemperatur fest oder hochviskos sein können. Werden bei Raumtemperatur hochviskose Niotenside eingesetzt, so ist bevorzugt, dass diese eine Viskosität oberhalb von 20 Pas, vorzugsweise 35 Pas und insbesondere oberhalb von 40 Pas aufweisen. Auch Niotenside, die bei Raumtemperatur eine wachsartige Konsistenz besitzen, sind bevorzugt.

Bevorzugte bei Raumtemperatur feste Niotenside stammen aus den Gruppen der alkoxylierten Niotenside, insbesondere der ethoxylierten primären Alkohole und Mischungen dieser Tenside mit strukturell komplizierter aufgebauten Tensiden, wie Polyoxypropylen/Polyoxyethylen/Polyoxypropylen (PO/EO/PO)-Tenside. Solche (PO/EO/PO)-Niotenside zeichnen sich darüber hinaus durch gute Schaumkontrolle aus.

In einer bevorzugten Ausführungsform ist das nichtionische Tensid mit einem Schmelzpunkt oberhalb Raumtemperatur ein ethoxyliertes Niotensid, das aus der Reaktion eines Monohydroxyalkohols oder Alkylphenols mit 6 bis 20 C-Atomen mit mindestens 12 Mol, vorzugsweise 15 Mol und insbesondere mindestens 20 Mol Ethylenoxid pro Mol Alkohol bzw. Alkylphenol entstanden ist.

Ein besonders bevorzugtes bei Raumtemperatur festes Niotensid wird aus einem geradkettigen $C_{16-20}$-Fettalkohol, vorzugsweise einem $C_{18}$-Alkohol und mindestens 12 Mol, vorzugsweise 15 Mol und insbesondere mindestens 20 Mol Ethylenoxid erhalten.

Demnach sind besonders ethoxylierte(s) Niotensid(e) bevorzugt, das/die aus $C_{6-20}$-Monohydroxyalkanolen oder $C_{6-20}$-Alkylphenolen oder $C_{6-20}$-Fettalkoholen und mehr als 12 Mol, vorzugsweise mehr als 15 Mol und insbesondere mehr als 20 Mol Ethylenoxid pro Mol Alkohol gewonnen wurde(n).

Das Niotensid besitzt vorzugsweise zusätzlich Propylenoxideinheiten im Molekül. Vorzugsweise machen solche PO-Einheiten bin zu 25 Gew.-%, insbesondere bis zu 15 Gew.-% der gesamten Molmasse des nichtionischen Tensids aus. Besonders bevorzugte nichtionische Tenside sind ethoxylierte Monohydroxyalkanole oder Alkylphenole, die zusätzlich Polyoxyethylen-Polyoxypropylen-Blockcopolymereinheiten aufweisen. Der Alkohol- bzw. Alkylphenolteil solcher Niotensidmoleküle macht dabei mehr als 30 Gew.-%, vorzugsweise mehr als 50 Gew.-% und insbesondere mehr als 70 Gew.-% der gesamten Molmasse solcher Niotenside aus. Bevorzugte Mittel sind dadurch gekennzeichnet, dass sie ethoxylierte und propoxylierte Niotenside enthalten, bei denen die Propyleneinheiten im Molekül bis zu 25 Gew.-%, vorzugsweise bis zu 20 Gew.-% und insbesondere bis zu 15 Gew.-% der gesamten Molmasse des nichtionischen

Tensids ausmachen, enthalten.

Weitere besonders bevorzugt einzusetzende Niotenside mit Schmelzpunkten oberhalb Raumtemperatur enthalten 40 bis 70 % eines Polyoxypropylen/Polyoxyethylenl Polyoxypropylen-Blockpolymerblends, der 75 Gew.-% eines umgekehrten Blockcopolymers von Polyoxyethylen und Polyoxypropylen mit 17 Mol Ethylenoxid und 44 Mol Propylenoxid und 25 Gew.-% eines Blockcopolymers von Polyoxyethylen und Polyoxypropylen, initiiert mit Trimethylolpropan und enthaltend 24 Mol Ethylenoxid und 99 Mol Propylenoxid pro Mol Trimethylolpropan.

Nichtionische Tenside, die mit besonderem Vorzug eingesetzt werden können, sind beispielsweise unter dem Namen Genapol® PF 10 oder Genapo® PF 20 der Firma Clariant Produkte (Deutschland) GmbH erhältlich.

Bevorzugt ist auch ein nichtionisches Tensid der Formel

$$R_1O[CH_2CH(CH_3)O]x[CH_2CH_2C]y[CH_2CH(OH)R_2]$$

in der $R_1$ für einen linearen oder verzweigten aliphatischen Kohlenwasserstoffrest mit 4 bis 18 Kohlenstoffatomen oder Mischungen hieraus steht, $R_2$ für einen linearen oder verzweigten Kohlenwasserstoffrest mit 2 bis 26 Kohlenstoffatomen oder Mischungen hieraus steht und x für Werte zwischen 0,5 und 1,5 und y für einen Wert von mindestens 15 steht.

Weitere bevorzugt einsetzbare Niotenside sind die endgruppenverschlossenen Poly(oxyalkylierten) Niotenside der Formel

$$R_1O[CH_2CH(R_3)O]x[CH_2]kCH(OH)[CH_2]jR_2]$$

in der $R_1$ und $R_2$ für lineare oder verzweigte, gesättigte oder ungesättigte, aliphatische oder aromatische Kohlenwasserstoffreste mit 1 bis 30 Kohlenstoffatomen stehen, $R_3$ für H oder einen Methyl-, Ethyl-, n-Propyl-, iso-Propyl-, n-Butyl-, iso-Butyl- oder tert.-Butylrest steht, x für Werte zwischen 1 und 30, k und j für Werte zwischen 1 und 12, vorzugsweise zwischen 1 und 5 stehen. Wenn der Wert $x \geq 2$ ist, kann jedes $R_3$ in der oben stehenden Formel unterschiedlich sein. $R_1$ und $R_2$ sind vorzugsweise lineare oder verzweigte, gesättigte oder ungesättigte, aliphatische oder aromatische Kohlenwasserstoffreste mit 6 bis 22 Kohlenstoffatomen, wobei Reste mit 8 bis 18 C-Atomen besonders bevorzugt sind. Für den Rest $R_3$ sind H, Methyl oder Ethyl besonders bevorzugt. Besonders bevorzugte Werte für x liegen im Bereich von 1 bis 20, insbesondere von 6 bis 15.

Wie bereits beschrieben, kann jedes $R_3$ in der allgemeinen Formel (VI) unterschiedlich sein, falls $x \geq 2$ ist. Hierdurch kann die Alkylenoxideinheit in der eckigen Klammer variiert werden. Steht x beispielsweise für 3, kann der Rest $R_3$ Ethylenoxid- ($R_3$ = H) oder Propylenoxid- ($R_3 = CH_3$) Einheiten zu bilden, die in jedweder Reihenfolge aneinandergefügt sein können, beispielsweise (EO)(PO)(EO), (EO)(EO)(PO), (EO)(EO)(EO), (PO)(EO)(PO), (PO)(PO)(EO) und (PO)(PO)(PO). Der Wert 3 für x ist hierbei beispielhaft gewählt worden und kann durchaus größer sein, wobei die Variationsbreite mit steigenden x-Werten zunimmt und beispielsweise eine große Anzahl (EO)-Gruppen, kombiniert mit einer geringen Anzahl (PO)-Gruppen einschließt, oder umgekehrt.

Insbesondere bevorzugt sind endgruppenverschlossene Poly(oxyalkylierte) Alkohole der allgemeinen Formel

$$R_1O[CH_2CH(R_3)O]_xCH_2CH(OH)CH_2R_2.$$

In dieser Formel sind $R_1$, $R_2$ und $R_3$ wie bei der vorherigen allgemeinen Formel definiert. X steht für Zahlen von 1 bis 30, vorzugsweise von 1 bis 20 und insbesondere von 4 bis 16. Besonders bevorzugt sind Tenside, bei denen die Reste $R^1$ und $R^2$ 8 bis 18 C-Atome aufweisen, $R^3$ für H steht und x Werte von 6 bis 15 annimmt. Niotenside, die mit besonderem Vorzug eingesetzt werden können, sind beispielsweise unter dem Namen Genapol® BE 2410, Genapol® BE 2810 oder Genapol® BE 2805 der Firma Clariant Produkte (Deutschland) GmbH erhältlich.

Bevorzugt sind im Rahmen der vorliegenden Erfindung als nichtionische Tenside auch endgruppenverschlossene Tenside sowie Niotenside mit Butyloxygruppen einsetzbar. Zur ersten Gruppe gehören dabei insbesondere Vertreter der allgemeinen Formel

$$R_1O[CH_2CH(R_3)O]_xR_2$$

in der $R_1$ für einen linearen oder verzweigten, gesättigten oder ungesättigten, aliphatischen oder aromatischen Kohlenwasserstoffrest mit 1 bis 30 C-Atomen, $R_2$ für einen linearen oder verzweigten, gesättigten oder ungesättigten, aliphatischen oder aromatischen Kohlenwasserstoffrest mit 1 bis 30 C-Atomen, welcher optional mit 1, 2, 3, 4 oder 5 Hydroxygruppen sowie optional mit weiteren Ethergruppen substituiert ist, $R_3$ für Wasserstoff, Methyl, Ethyl, n-Propyl, iso-Propyl, n-Butyl, iso-Butyl oder tert.-Butyl steht und x Werte zwischen 1 und 40 annehmen kann. $R_2$ kann optional alkoxyliert sein, wobei die Alkoxygruppe vorzugsweise ausgewählt ist aus Ethoxy-, Propoxy-, Butyloxygruppen und deren Mischungen.

Bevorzugt sind hierbei Tenside der allgemeinen Formel (VIII), in denen $R_1$ für einen $C_{9-11-}$ oder $C_{11-15}$-Alkylrest

steht, $R_3$ = H ist und X einen Wert von 8 bis 15 annimmt, während $R_2$ vorzugsweise für einen geradkettigen oder verzweigten gesättigten Alkylrest steht. Besonders bevorzugte Tenside lassen sich durch die Formeln $C_{9-11}(EO)_8C(CH_3)_2CH_2CH_3$, $C_{11-15}(EO)_{15}(PO)_6$-$C_{12-14}$, $C_{9-11}(EO)_8(CH_2)_4CH_3$ beschreiben.

Geeignet sind weiterhin gemischt alkoxylierte Tenside, wobei solche bevorzugt sind, die Butyloxygruppen aufweisen. Solche Tenside lassen sich durch die allgemeine Formel

$$R_1(EO)_a(PO)_b(BO)_c$$

beschreiben, in der $R_1$ für einen linearen oder verzweigten, gesättigten oder ungesättigten, aliphatischen oder aromatischen Kohlenwasserstoffrest mit 1 bis 30, vorzugsweise 6 bis 20 C-Atomen, a für Werte zwischen 2 und 30, b für Werte zwischen 0 und 30 und c für Werte zwischen 1 und 30, vorzugsweise zwischen 1 und 20 steht. Alternativ können die EO- und PO-Gruppen in dieser allgemeinen Formel auch vertauscht sein.

Besonders bevorzugte Vertreter aus dieser Gruppe von Tensiden lassen sich durch die Formeln $C_{9-11}(PO)_3(EO)_{13}(BO)_{15}$, $C_{9-11}(PO)_3(EO)_{13}(BO)_6$, $C_{9-11}(PO)_3(EO)_{13}(BO)_3$, $C_{9-11}(EO)_{13}(BO)_6$, $C_{9-11}(EO)_{13}(BO)_3$, $C_{9-11}(PO)(EO)_{13}(BO)_3$, $C_{9-11}(EO)_8(BO)_3$, $C_{9-11}(EO)_8(BO)_2$, $C_{12-15}(EO)_7(BO)_2$, $C_{9-11}(EO)_8(BO)_2$, und $C_{9-11}(EO)_8(BO)$ beschreiben. Ein besonders bevorzugtes Tensid der Formel $C_{13-15}(EO)_{9-10}(BO)_{1-2}$ ist kommerziell unter dem Namen Plurafac® LF 221 erhältlich. Mit Vorzug einsetzbar ist auch ein Tensid der Formel $C_{12-13}(EO)_{10}(BO)_2$. Zur Unterdrückung der Schaumbildung beim Spülvorgang können Schauminhibitoren eingesetzt werden. Als Schauminhibitoren eignen sich beispielsweise Seifen natürlicher oder synthetischer Herkunft, die einen hohen Anteil an $C_{18}$-$C_{24}$-Fettsäuren aufweisen. Geeignete nichttensidartige Schauminhibitoren sind beispielsweise Organopolysiloxane und deren Gemische mit mikrofeiner, gegebenenfalls silanierter Kieselsäure sowie Paraffine, Wachse, Mikrokristallinwachse und deren Gemische mit silanierter Kieselsäure oder Bisfettsäurealkylendiamiden. Mit Vorteilen werden auch Gemische aus verschiedenen Schauminhibitoren verwendet, zum Beispiel solche aus Silikonen, Paraffinen oder Wachsen. Vorzugsweise sind die Schauminhibitoren, insbesondere Silikon- und/oder Paraffinhaltige Schauminhibitoren, an eine granulare, in Wasser lösliche beziehungsweise dispergierbare Trägersubstanz gebunden. Insbesondere sind dabei Mischungen aus Paraffinen und Bistearylethylendiamid bevorzugt.

Im Rahmen der vorliegenden Erfindung sind Geschirrreinigungsmittel bevorzugt, die das/die nichtionische(n) Tensid(e) in Mengen von 0,5 bis 10 Gew.-%, vorzugsweise von 1 bis 5 Gew.-%, und besonders bevorzugt von 1,5 bis 4 Gew.-%, jeweils bezogen auf die fertigen Mittel enthalten.

In Verbindung mit den genannten nichtionischen Tensiden können auch anionische, kationische und/oder amphotere Tenside eingesetzt werden, wobei diese wegen ihres Schaumverhaltens beim maschinellen Geschirrspülen nur untergeordnete Bedeutung besitzen und zumeist nur in Mengen unterhalb von 10 Gew.-%, meistens sogar unterhalb von 5 Gew.-%, beispielsweise von 0 bis 2,5 Gew.-% jeweils bezogen auf das Mittel, eingesetzt werden.

Zur besseren Ablösung eiweiß- oder stärkehaltiger Speisereste können vorzugsweise Enzyme wie Proteasen, Amylasen, Lipasen oder Cellulasen eingesetzt werden, beispielsweise Proteasen wie BLAP TM 140 der Firma Henkel, Optimase TM -M-440, Optimase TM -M-330, Opticlean TM -M-375, Opticlean TM -M-250 der Firma Solvay Enzymes, Maxacal TM CX 450 000, Maxapem TM der Firma Ibis, Savinase TM 4,0 T, 6,0 T, 8,0 T der Firma Novo oder Experase TM T der Firma Ibis; Amylasen wie Termamyl TM 60 T, der Firma Novo, Amylase-LT TM der Firma Solvay Enzymes oder Maxamyl TM P 5000, CXT 5000 oder CXT 2900 der Firma Ibis; Lipasen wie Lipolase TM 30 T der Firma Novo; Cellulasen wie Celluzym TM 0,7 T der Firma Novo Nordisk. Enzyme können in den erfindungsgemäßen Mitteln in einer Menge v 0,1 bis 5 Gew.-%, vorzugsweise 1 bis 3 Gew.-%, bezogen auf das gesamte Geschirrspülmittel, enthalten sein.

Als Aminosäuren kommen synthetische oder natürlich vorkommende Aminosäuren in Frage, die z. B. durch Hydrolyse aus pflanzlichen oder tierischen Proteinen wie Kollagen, Keratin, Casein, Elastin, Sojaprotein, Weizengluten oder Mandelprotein erhältlich sind.

Bevorzugt sind alpha -Aminosäuren, z. B. Serin, Threonin, Ornithin, Arginin, Lysin, Asparagin, Glutamin, Phenylalanin oder Tyrosin, insbesondere jedoch Glycin, Alanin, Valin, Leucin und Isoleucin. Besonders bevorzugt ist Glycin bzw. dessen Alkali- oder Ammoniumsalze, z. B. Natriumglycinat.

Neben den Aminosäuren können in den erfindungsgemäßen Geschirrspülmitteln auch deren Alkali-, Erdalkalioder Ammoniumsalze eingesetzt werden, insbesondere die Natriumsalze.

Durch Variation des Verhältnisses der Aminosäuren zu ihren Salzen lässt sich ebenso problemlos wie mit dem System Hydrogencarbonat/Carbonat ein bestimmter gewünschter pH-Wert einstellen. Hinsichtlich der Kalkbelagsinhibierung ist das Alkaliträger-System Aminosäure/Aminosäuresalz dem System Hydrogencarbonat/Carbonat jedoch deutlich überlegen.

Aminosäuren bzw. Aminosäuresalze sind in den erfindungsgemäßen Mitteln in Mengen von 0,5 bis 60 Gew.-%, vorzugsweise 10 bis 50 Gew.-%, enthalten. Dabei können auch Mischungen verschiedener Aminosäuren bzw. Aminosäuresalze verwendet werden. Fakultativ können Carbonat und/oder Hydrogencarbonate, insbesondere Alkalicarbonate und/oder -hydrogencarbonate in Mengen von bis zu 15 Gew.-%, bezogen auf das gesamte Geschirrspülmittel, enthalten sein. Vorzugsweise sind die erfindungsgemäßen Geschirrspülmittel jedoch frei von Carbonaten und/oder

Hydrogencarbonaten. Auch auf den Einsatz hochalkalischer Metasilikate, z. B. Natriummetasilikat, wird vorzugsweise verzichtet; Disilikate hingegen können in Form ihrer Alkalisalze fakultativ in Mengen von 0,1 bis 20 Gew.-%, bezogen auf das ges Geschirrspülmittel, enthalten sein.

Als Builderkomponenten, denen die eigentliche Funktion zukommt, Härtebildner des Wassers zu komplexieren und ausgefallenen Ka in dispergierter Form in der Waschflotte zu halten, um so Kalkbeläge zu verhindern, kommen z. B. Organophosphonsäuren bzw. deren Salze, kristalline Schichtsilikate, Zeolithe, di- und mehrfunktionelle organische Carbonsäuren bzw. deren Salze, oxidierte Stärke und Polycarbonsäuren bzw. Polycarboxylate in Frage. Auf die früher verwendeten Phosphate, z. B. Pentanatriumtriphosphat, die prinzipiell ebenfalls enthalten sein können, wird aus ökologischen Gründen vorzugsweise verzichtet.

Bevorzugte Builderkomponenten sind di- oder mehrfunktionelle organische Carbonsäuren bzw. deren Salze, insbesondere Zitronensäure bzw. deren Salze und/oder synthetische Polycarbonsäuren bzw. Polycarboxylate, die in einer Gesamtmenge von 1 bis 60 Gew.-%, vorzugsweise 10 bis 40 Gew.-%, bezogen auf das gesamte Geschirrspülmittel, enthalten sind.

Unter synthetischen Polycarbonsäuren bzw. Polycarboxylaten sind die synthetischen Polymere bzw. deren Salze der Polymerisationsprodukte ungesättigter Carbonsäuren bzw. deren Salze zu verstehen, zu denen z. B. Polyacrylsäure, Polymethacrylsäure, Polymaleinsäuren oder Copolymere der Acrylsäure mit Maleinsäure bzw. Maleinsäureanhydrid gehören.

Geeignete Polyacrylate sind z. B. Alcosperse TM 102, 104, 106, 404, 406 der Firma Alco, Acrysole TM A N1, LMW 45 N, LMW 10 N der Firma Norsohaas, Degapas TM der Firma Degussa; geeignete Copolymere aus Polyacrylsäure und Maleinsäure sind z. B. Sokalan TM cP 5, CP 7 der Firma BASF, Acrysol TM QR 1014 der Firma Norsohaas, Alcosperse TM 175 der Firma Alco.

Die Geschirrspülmittel können weiterhin Bleichmittel auf Sauerstoffbasis, insbesondere Perborate und/oder Percarbonate in einer Menge von 0,5 bis 20 Gew.-%, vorzugsweise bis 10 Gew.-%, bezogen auf das gesamte Geschirrspülmittel enthalten.

Besondere Bedeutung haben das Natriumperborat-tetrahydrat ($NaBO_2$. $H_2O_2.3H_2O$), das Natriumperborat-monohydrat ($NaBO_2.H_2O_2$) und das Peroxycarbonat ($Na_2CO_3.1{,}5\ H_2O_2$). Weitere brauchbare Bleichmittel sind z. B. persaure Salze organischer Säuren, wie Perbenzoate oder Salze der Diperdodecandisäure. Außerdem sind fakultativ Bleichaktivatoren enthalten. Geeignete Bleichaktivatoren sind insbesondere N-Acyl- und O-Acyl-Verbindungen, vorzugsweise tetraacylierte Diamine wie Tetraacetylethylendiamin (TAED). Die erfindungsgemäßen Mittel enthalten solche üblichen Bleichaktivatoren in einer Menge von 0,1 bis 10 Gew.-%, vorzugsweise 1 bis 5 Gew.-%. Die erfindungsgemäßen Mittel können fakultativ auch aktivchlorabspaltende Mittel wie z.B. Trichlorisocyanursäure enthalten; vorzugsweise sind sie jedoch frei von aktivchlorabspaltenden Mitteln.

Als Säuren werden insbesondere organische Säuren, vorzugsweise kurzkettige aliphatische Monocarbonsäuren, Hydroxycarbonsäuren und Dicarbonsäuren bevorzugt. Beispiele für aliphatische Monocarbonsäuren und Dicarbonsäuren sind $C_1$ bis $C_6$-Alkyl- und -Alkenylsäuren, wie Glutarsäure, Succinsäure, Propionsäure, Adepinsäure und Essigsäure. Beispiele für Hydroxycarbonsäuren sind Hydroxyessigsäure und Zitronensäure.

Die erfindungsgemäßen Polyester können auch in separaten Klarspülformulierungen zum Einsatz kommen.

Eine besonders bevorzugte Ausführungsform sind feste Geschirrreinigerformulierungen mit integriertem Klarspüler, enthaltend neben den erfindungsgemäßen Polyestern, 0 bis 50 Gew.-% Phosphate, bevorzugt Pentanatriumtriphosphat, 0 bis 5 Gew.-% Phosphonate, 0 bis 50 Gew.-% Natriumcitrat, 0 bis 10 Gew.-% Natriumpolycarboxylate, 0 bis 40 Gew.-% Soda, 0 bis 25 Gew.-% Natriumhydrogencarbonat, 0 bis 30 Gew.-% Natriumdisilikat, 5 bis 15 Gew.-% Bleichmittel, bevorzugt Natriumperborat, 1 bis 5 Gew.-% Bleichaktivator, bevorzugt TAED, 1 bis 5 Gew.-% Enzyme, bevorzugt Proteasen und Amylasen, 1 bis 10 Gew.-% nichtionische Tenside, bevorzugt Fettalkoholalkoxylate und Polyethylenglykol 0 bis 2 Gew.-% Paraffine, 0 bis 1 Gew.-% Silberschutz, Duft- und Farbstoffe.

Die nachfolgenden Beispiele sollen den Gegenstand der Erfindung näher erläutern, ohne ihn darauf einzuschränken.

Beispiele:

I.) Allgemeine Synthesevorschrift zur Herstellung der nichtionischen Polyester 1 bis 8

In einem 2L-Vierhalskolben mit KPG-Rührer, Innenthermometer, Vigreux-Kolonne, Destillationsbrücke und Anschütz-Thiele-Vorstoß wurden zunächst die Edukte Dimethylterephthalat (DMT), 1,2-Ethandiol (EG) und /oder 1,2-Propandiol (PG) und wasserfreies Natriumacetat (NaOAc) vorgelegt (Mengenangaben siehe Tabelle1). Das Gemisch wurde auf dem Ölbad allmählich erhitzt bis es bei ca. 125 °C vollständig aufgeschmolzen ist. Ab etwa 130 °C setzte die Umesterung ein, wobei Methanol abdestilliert. Ca. 15 Minuten nach Beginn der Destillation wurde bei einer Temperatur von 160 °C Titantetraisopropylat (IPT) zugegeben. Nach insgesamt ca. 2 Stunden wurde die Umesterung bei 200°C abgebrochen und das Ölbad gesenkt.

Nun wurden die entsprechenden Polyethylenglykole (PEG), Methylpolyglykole (MPEG) und gegebenenfalls polyfunktionelle Verbindungen (PFV) (Mengenangaben siehe Tabelle 1) der Schmelze zugesetzt und weiter bis auf ca. 215 °C erhitzt. Nachfolgend wurde Vakuum angelegt, das innerhalb von 30 Minuten bis auf 10 mbar abgesenkt wurde. Anschließend wurde für ca. eine weitere Stunde bei 215 °C/10 mbar nachkondensiert, wobei die Menge an anfallendem Destillat merklich abnahm. Schließlich wird das Ölbad gesenkt, die Apparatur vom Vakuum getrennt und mit Stickstoff belüftet. Die noch heiße Schmelze wurde abgefüllt.

Tabelle 1: Edukte und eingesetzte Eduktmengen zur Herstellung der Polyester 1 bis 8

| Edukt | Polyester 1 | Polyester 2 | Polyester 3 | Polyester 4 | Polyester 5 | Polyester 6 | Polyester 7 | Polyester 8 |
|---|---|---|---|---|---|---|---|---|
| DMT/mol | 0,7 | 0,5 | 0,15 | 0,25 | 0,16 | 0,25 | 0,16 | 0,16 |
| EG/mol | 1,35 | 0,28 | 0,3 | 0,48 | 0,3 | 0,48 | 0,3 | 0,3 |
| PG/mol | - | 0,68 | - | - | - | - | - | - |
| Typ PEG | 6000 | 6000 | 6000 | 4000 | 6000 / 200 | 3000 | 6000 | 6000 |
| PEG/mol | 0,18 | 0,13 | 0,04 | 0,065 | 0,04 / 0,004 | 0,07 | 0,04 | 0,04 |
| Typ MPEG | - | 750 / 2000 | 750 / 2000 | 750 / 2000 | - | - | - | - |
| MPEG/mol | - | 0,05 / 0,02 | 0,015 / 0,007 | 0,024 / 0,011 | - | - | - | - |
| IPT | 0,0007 | 0,0005 | 0,0001 | 0,0002 | 0,00016 | 0,0002 | 0,0002 | 0,0015 |
| NaOAc | 0,004 | 0,006 | 0,0009 | 0,0015 | 0,0009 | 0,0015 | 0,0009 | 0,0002 |
| Typ PFV | - | - | - | - | - | - | A | B |
| PFV/mol | - | - | - | - | - | - | 0,01 | 0,0015 |

Polyester 4 und Polyester 6 fallen nicht in den beanspruchten Bereich.

| | |
|---|---|
| A | 2,2-Bis-(hydroxymethyl)-propionsäure |
| B | Pentaerythrit |
| DMT | Dimethyltherephthalat |
| EG | 1,2-Ethandiol |
| PG | 1,2-Propandiol |
| PEG | Polyethylenglykol (200, 1500, 3000, 4000, 6000) |
| IPT | Titantetraisopropylat |
| NaOAc | Natriumacetat |
| PVF | polyfunktionelle Verbindungen |
| MPEG | Methylpolyglykole |

II.) Anwendungstechnische Untersuchungen der nichtionischen Polyester 1 bis 8

II. a) Bestimmung des Fließfaktors $ff_c$ aus Messungen im Ringschergerät

Zur Beurteilung der Fließeigenschaften der hergestellten Soil Release Polyester eignet sich am besten die dimensionslose Größe Fließfaktor $ff_c$, der definiert ist als das Verhältnis von Verfestigungsspannung $\sigma_1$ zu Schüttgutfestigkeit $\sigma_c$.

$$ff_c = \sigma_1/\sigma_C$$

Das zu prüfende Schüttgut wurde zunächst durch die Verfestigungsspannung $\sigma_1$ verfestigt. Anschließend setzte man die Probe einer zunehmenden Druckspannung aus. Die zum Bruch (d. h. zum Fließen) der Schüttgutprobe führende Spannung ist die Schüttgutfestigkeit $\sigma_c$.
Umso größer der Fließfaktor $ff_c$ ist, desto besser Fließeigenschaften weist das Schüttgut auf. Folgende Einteilung nach Jenike wurde angewandt:

| | |
|---|---|
| $ff_c < 1$ | nicht fließend |
| $1 < ff_c < 2$ | sehr kohäsiv bis nicht fließend |
| $2 < ff_c < 4$ | kohäsiv |
| $4 < ff_c < 10$ | leicht fließend |
| $10 < ff_c$ | frei fließend |

Die angegebenen Fließfähigkeiten wurden mittels eines Ringschergerätes vom Typ RST-01.pc der Firma Dr. Dietmar Schulze Schüttgutmesstechnik bestimmt. Die Messung und Auswertung erfolgte automatisch (rechnergesteuert).

Ii.b) Untersuchung des Soil Release Effekts:

Die erfindungsgemäßen Soil Release Polyester wurden mit dem "Dirty Motor Oil Test" auf ihren Soil Release Effekt hin geprüft. Dazu wurden die Polymere in einer Konzentration von 1% (Wirkstoff) dem Testwaschmittel IEC-A zugemischt und anschließend eine Waschlauge mit einer Waschmittelkonzentration von 6 g/L angesetzt. Mit der Waschlauge wurden die beiden Standardtestgewebe Polyester/ Baumwolle WFK 20A und Polyester WFK 30A vorgewaschen. Die Gewebe wurden anschließend getrocknet und mit Motorenaltöl angeschmutzt. Nach einem Einwirken des Motorenaltöls von einer Stunde bei Raumtemperatur wurden die angeschmutzten Gewebeprüflinge unter den gleichen Waschbedingungen mit dem Testwaschmittel IEC-A, enthaltend die erfindungsgemäßen Polymere, nachgewaschen. Nach dem Trocknen wurde die Remission der Testgewebe gemessen. Als Vergleich wurden angeschmutzte Testgewebe unter den gleichen Testbedingungen, jedoch ohne einen Zusatz der Soil Release Polymere zu dem Testwaschmittel gewaschen und deren Remission bestimmt.
Die Differenzen der Remissionswerte aus den Wäschen mit Soil Release Polymer und der Wäschen ohne Soil Release Polymer geben den erzielten Soil Release Effekt wieder. Als Benchmark wurde der Soil Release Effekt von zwei kommerziell verfügbaren, granulierten Soil Release Polymeren untersucht.
Die detailierten Waschbedingungen sind in Tabelle 2 wiedergegeben.

Tabelle 2: Waschbedingungen

| | |
|---|---|
| Waschmaschine: | Linitest |
| Wasserhärte: | 15°dH |
| Flottenverhältnis | 1 : 40 |
| Waschtemperatur: | 40°C |
| Waschzeit: | 30 Min. |
| Waschmittelkonzentration: | 6 g/l |

Die Zusammensetzung des verwendeten Testwaschmittels IEC-A zeigt die Tabelle 3.

Tabelle 3: IEC-A Waschpulver (phosphatfrei, mit Bleichmittel)

| | |
|---|---|
| Alkylbenzolsulfonat, Na-Salz | 8,8 % |
| $C_{12-18}$-Alkoholethoxylat mit 7 EO | 4,7 % |
| Seife | 3,2 % |
| Schauminhibitor DC2-4248S, Dow Corning | 3,9 % |
| Zeolith 4A | 28,3 % |
| Soda | 11,6 % |
| Polycarboxylat (Sokalan® CP5) | 2,4 % |
| Natriumsilikat | 3,0 % |
| Carboxymethylcellulose | 1,2 % |
| Phosphonat (Dequest® 2066) | 2,8 % |
| Optischer Aufheller | 0,2 % |
| Natriumsulfat | 6,5 % |
| Protease Savinase® 8.0, Novo Nordisk | 0,4 % |
| TAED | 5,0 % |
| Natriumpercarbonat | 18,0 % |

II. c) Ergebnisse der anwendungstechnischen Untersuchungen

Tabelle 4: Soil Release Effekte, Molekulargewichte, Schmelzpunkte, sowie Fließeigenschaften der Soil Release Polyester 1 bis 8 im Vergleich zu den marktgängigen Produkten Repel-O-Tex® SRP 6 und Sokalan® SR 100

| | DMO 1 | DMO 2 | GPC $M_p$ | m. p. | $ff_c$ |
|---|---|---|---|---|---|
| Polyester 1 | 5,1 | 4,3 | 9970 | 57 | 18 |
| Polyester 2 | 4,5 | 5,0 | 8930 | 58 | 16 |
| Polyester 3 | 4,9 | 1,2 | 7070 | 55 | 16 |
| Polyester 4 | 5,1 | 2,5 | 7750 | 52 | 14 |
| Polyester 5 | 5,1 | 4,8 | 11360 | 57 | 17 |
| Polyester 6 | 4,1 | 5,2 | 8540 | 49 | 10 |
| Polyester 7 | 2,3 | 2,0 | 7420 | 58 | 17 |
| Polyester 8 | 7,3 | 6,0 | 8340 | 57 | 16 |
| Repel-O-Tex SRP 6 | 7,9 | 3,8 | - | 48 | 4 |
| Sokalan SR 100 | 3,1 | 0,7 | - | - | 4 |

| | |
|---|---|
| DMO 1: | Soil Release Effekt gegen Dirty Motor Oil am Testgewebe WFK 20A |
| DMO 2: | Soil Release Effekt gegen Dirty Motor Oil am Testgewebe WFK 30A |
| GPC: | Gelpermeationschromatographie |
| m.p.: | Melting point in [°C] (definiert als Peakmaximum aus Differential Scanning Calorimetry) |
| $ff_c$: | Fließfaktor, ermittelt aus Messungen im Ringschergerät |

Verzeichnis der verwendeten Handelsprodukte:

| | |
|---|---|
| Repel®-O-Tex SRP 6 (Fa. Rhodia) | Nichtionischer Soil Release Polyester in Granulatform, ca. 99% WS |

(fortgesetzt)

| | |
|---|---|
| Sokalan® SR 100 (Fa. BASF) | Nichtionischer Soil Release Polyester in Granulatform, ca. 100% WS |

Messung der Schmelzpunkte:

Der Schmelzbereich der Substanzen wurde durch Differential Scanning Calorimetry an einem Mettler Toledo DSC 821 e ermittelt. Gemessen wurde in einem Temperaturintervall zwischen 10 °C und 80 °C mit einer Heizrate von 5 K pro Minute im Aluminiumtiegel. Die angegebenen Schmelzpunkte entsprechen dem Peakmaximum der aufgezeichneten Erweichungskurve.

Bestimmung der Molekulargewichte:

Die Molekulargewichtsverteilung wurde mittels Gelpermeationschromatographie (GPC) bestimmt. Hierbei wurde gegen eng verteilte Polystyrolsulfonat Standards gemessen und mit Acetonitril/Wasser im Gewichtsverhältnis 45:55 als Lösungsmittelgemisch gearbeitet. Zur Auftrennung wurde eine Suprema 30-Säule verwendet. 100 μl einer Lösung der Konzentration 1,000 g/l wurden injiziert und bei einer Flußrate von 0,8 ml/min eluiert. Die angegebenen Molekulargewichte wurden als Peakmaximum Mp der gemessenen Verteilungskurve bestimmt.

## Patentansprüche

1. Additive für Wasch- und Reinigungsmittel erhalten durch Polykondensation einer

   a) aromatischen Dicarbonsäure und/oder deren $C_1$-$C_4$-Alkylestern,
   b) Ethylenglykol,
   c) 1,2-Propylenglykol,
   d) Polyethylenglykol mit einer mittleren Molmasse [$M_n$] von 5000 bis 8.000 g/mol,
   e) $C_1$-$C_4$-Alkylpolyalkylenglykolether mit einer mittleren Molmasse des Polyalkylenglykolethers von 200 bis 5.000 und
   f) einer polyfunktionellen Verbindung, wobei die Molverhältnisse der Komponenten b), c), d), e) und f), jeweils bezogen auf 1 Mol der Komponente a); 0,1 bis 4 Mol für die Komponente b); 0 bis 4 Mol für die Komponente c); 0,1 bis 0,5 Mol für die Komponente d); 0 bis 0,5 Mol für die Komponente e) und 0 bis 0,25 Mol für die Komponente f) betragen; und **gekennzeichnet durch** ein Molekulargewicht mit dem Peakmaximum $M_p$ von 6.000 bis 14.000 g/mol.

2. Additive nach Anspruch 1, **dadurch gekennzeichnet, dass** die Molverhältnisse der Komponenten b), c), d), e) und f), jeweils bezogen auf 1 Mol der Komponente a); 1,0 bis 2,5 Mol für die Komponente b); 0 Mol für die Komponente c); 0,1 bis 0,4 Mol für die Komponente d); 0 bis 0,25 Mol für die Komponente e) und 0 bis 0,2 Mol für die Komponente f) betragen.

3. Additive nach Anspruch 1, **dadurch gekennzeichnet, dass** die Molverhältnisse der Komponenten b), c), d), e) und f) jeweils bezogen auf 1 Mol der Komponente a); 1,0 bis 2,5 Mol für die Komponente b); 0 Mol für die Komponente c); 0,1 bis 0,3 Mol für die Komponente d); 0 bis 0,2 Mol für die Komponente e) und 0 bis 0,1 Mol für die Komponente f) betragen.

4. Additive nach Anspruch 1, **dadurch gekennzeichnet, dass** die Komponente a) Terephthalsäure und/oder Terephthalsäure-dimethylester ist.

5. Additive nach Anspruch 1, **dadurch gekennzeichnet, dass** das Polyethylenglykol d) eine mittlere Molmasse [Mn] von 5.000 bis 6.000, insbesondere 6.000 aufweist.

6. Additive nach einem oder mehreren der Ansprüche 1 bis 5, **dadurch gekennzeichnet, dass** sie einen Fließfaktor ffc von mehr als 8, vorzugsweise von 10 bis 30 aufweisen.

7. Additive nach einem oder mehreren der Ansprüche 1 bis 6, **dadurch gekennzeichnet, dass** sie einen Schmelzpunkt von über 40 °C, vorzugsweise über 50 °C, insbesondere über 55 °C aufweisen.

**8.** Wasch- und Reinigungsmittel enthaltend ein Additiv nach Anspruch 1.

## Claims

**1.** Additives for washing and cleaning compositions, obtained by condensation polymerization of an

a) aromatic dicarboxylic acid and/or $C_1$-$C_4$-alkyl esters thereof,
b) ethylene glycol,
c) 1,2-propylene glycol,
d) polyethylene glycol having an average molar mass [$M_n$] of 5000 to 8000 g/mol,
e) $C_1$-$C_4$-alkyl polyalkylene glycol ether having an average molar mass of 200 to 5000 for the polyalkylene glycol ether, and
f) a polyfunctional compound, wherein the molar ratios of components b), c), d), e) and f) based in each case on 1 mol of component a) are from 0.1 to 4 mol for component b), from 0 to 4 mol for component c), from 0.1 to 0.5 mol for component d), from 0 to 0.5 mol for component e) and from 0 to 0.25 mol for component f); and **characterized by** a molecular weight with a peak maximum Mp of 6000 to 14 000 g/mol.

**2.** The additives according to claim 1 wherein the molar ratios of components b), c), d), e) and f) based in each case on 1 mol of component a) are from 1.0 to 2.5 mol for component b), from 0 mol for component c), from 0.1 to 0.4 mol for component d), from 0 to 0.25 mol for component e) and from 0 to 0.2 mol for component f).

**3.** The additives according to claim 1 wherein the molar ratios of components b), c), d), e) and f) based in each case on 1 mol of component a) are from 1.0 to 2.5 mol for component b), from 0 mol for component c), from 0.1 to 0.3 mol for component d), from 0 to 0.2 mol for component e) and from 0 to 0.1 mol for component f).

**4.** The additives according to claim 1 wherein said component a) is terephthalic acid and/or dimethyl terephthalate.

**5.** The additives according to claim 1 wherein said polyethylene glycol d) has an average molar mass [Mn] of 5000 to 6000 and more particularly 6000.

**6.** The additives according to one or more of claims 1 to 5 having a flow factor ffc of more than 8 and preferably in the range from 10 to 30.

**7.** The additives according to one or more of claims 1 to 6 having a melting point of above 40°C, preferably above 50°C and more particularly above 55°C.

**8.** Washing and cleaning compositions comprising an additive according to claim 1.

## Revendications

**1.** Additifs pour agents de lavage et de nettoyage, obtenus par polycondensation

a) d'un acide dicarboxylique aromatique et/ou ses esters de $C_1$-$C_4$-alkyle,
b) d'éthylèneglycol
c) de 1,2-propylèneglycol
d) de polyéthylèneglycol présentant une masse molaire moyenne [$M_n$] de 5000 à 8000 g/mole
e) de $C_1$-$C_4$-alkylpolyalkylèneglycoléther présentant une masse molaire moyenne du polyalkylèneglycoléther de 200 à 5000 et
f) d'un composé polyfonctionnel, les rapports molaires des composants b), c), d), e) et f), à chaque fois par rapport à 1 mole du composant a), valant 0,1 à 4 moles pour le composant b), 0 à 4 moles pour le composant c), 0,1 à 0,5 mole pour le composant d), 0 à 0,5 mole pour le composant e) et 0 à 0,25 mole pour le composant f) et **caractérisés par** un poids moléculaire présentant un maximum de pic $M_p$ de 6000 à 14 000 g/mole.

**2.** Additifs selon la revendication 1, **caractérisés en ce que** les rapports molaires des composants b), c), d), e) et f), à chaque fois par rapport à 1 mole du composant a), valent 1,0 à 2,5 moles pour le composant b), 0 mole pour le composant c), 0,1 à 0,4 mole pour le composant d), 0 à 0,25 mole pour le composant e) et 0 à 0,2 mole pour le

composant f).

3. Additifs selon la revendication 1, **caractérisés en ce que** les rapports molaires des composants b), c), d), e) et f), à chaque fois par rapport à 1 mole du composant a), valent 1,0 à 2,5 moles pour le composant b), 0 mole pour le composant c), 0,1 à 0,3 mole pour le composant d), 0 à 0,2 mole pour le composant e) et 0 à 0,1 mole pour le composant f).

4. Additifs selon la revendication 1, **caractérisés en ce que** le composant a) est l'acide téréphtalique et/ou l'ester diméthylique de l'acide téréphtalique.

5. Additifs selon la revendication 1, **caractérisés en ce que** le polyéthylèneglycol d) présente une masse molaire moyenne [$M_n$] de 5000 à 6000, en particulier de 6000.

6. Additifs selon l'une ou plusieurs des revendications 1 à 5, **caractérisés en ce qu'**ils présentent un facteur d'écoulement $ff_c$ supérieur à 8, de préférence de 10 à 30.

7. Additifs selon l'une ou plusieurs des revendications 1 à 6, **caractérisés en ce qu'**ils présentent un point de fusion supérieur à 40°C, de préférence supérieur à 50°C, en particulier supérieur à 55°C.

8. Agents de lavage et de nettoyage contenant un additif selon la revendication 1.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 3893929 A
- DE 3324258
- US 3962152 A
- US 4702857 A
- WO 0218474 A
- EP 253567 A
- EP 442101 A
- EP 854136 A1
- US 3332880 A
- GB 1082179 A
- US 4664839 A
- US 3985669 A
- US 4605509 A
- EP 0384070 A
- US 3128287 A
- US 3635830 A
- US 4663071 A
- US 4566984 A
- US 3159581 A
- US 3213030 A
- US 3422021 A
- US 3400148 A
- US 3422137 A
- US 4374035 A
- WO 9117243 A

### In der Beschreibung aufgeführte Nicht-Patentliteratur

- *The Journal of the American Oil Chemists Society,* 1975, vol. 52, 323-329